# EUROPÄISCHE PATENTSCHRIFT

(11) **EP 1 877 932 B1**
(45) Veröffentlichungstag und Bekanntmachung des Hinweises auf die Patenterteilung: **05.05.2010**
(21) Anmeldenummer: 05747769.7
(22) Anmeldetag: 10.05.2005
(51) Int. Cl.: G06F 17/30

(54) **SYSTEM UND VERFAHREN ZUR AGGREGATION UND ÜBERWACHUNG VON DEZENTRALISIERT GESPEICHERTEN MULTIMEDIADATEN**
SYSTEM AND METHOD FOR AGGREGATING AND MONITORING DECENTRALLY STORED MULTIMEDIA DATA
SYSTEME ET PROCEDE D'AGREGATION ET DE CONTROLE DE DONNEES MULTIMEDIA ENREGISTREES DE FAÇON DECENTRALISEE

(43) Veröffentlichungstag der Anmeldung: 16.01.2008
(73) Patentinhaber: Netbreeze GmbH, 8600 Dübendorf (CH)
(72) Erfinder: KELLER, Leo, CH-8427 Rorbas-Freienstein (CH); RÜF, François, CH-8057 Zürich (CH)
(74) Vertreter: Braun, André jr.
(86) Internationale Anmeldenummer: PCT/EP2005/052120
(87) Internationale Veröffentlichungsnummer: WO 2006/119801

(56) Entgegenhaltungen:
- WO-A-2005/057426
- US-A1- 2002 120 609
- US-A1- 2003 195 872

## Beschreibung

Die Erfindung betrifft ein System und ein Verfahren zur Aggregation und Analyse von dezentralisiert gespeicherten Multimediadaten, wobei in einem Datenspeicher ein oder mehrere verknüpfbare Suchbegriffe abgespeichert werden, eine Recheneinheit über ein Netzwerk auf mit Quelldatenbanken verbundene Netzwerknodes zugreift und Daten der Quelldatenbanken basierend auf den Suchbegriffen selektiert werden. Die Erfindung betrifft insbesondere ein System und Verfahren zur Realtime-Analyse solcher dezentralisiert gespeicherter Multimediadaten.

Das Internet bzw. das weltweite Backbone-Netz ist heute zweifelsohne eine der wichtigsten Quellen zur Informationsbeschaffung in Industrie, Wissenschaft und Technik und gehört wahrscheinlich zu den wichtigsten technischen Errungenschaften des ausgehenden 20. Jahrhunderts. Es ist eine Tatsache, dass heute über das Internet auf gigantische Datenmengen zugegriffen werden kann, in einem Ausmass, wie es bis vor 10 Jahren noch kaum vorstellbar war. Trotz all der daraus entstehenden Vorteile ergibt sich damit jedoch auch die Schwierigkeit, wirklich relevante Daten in dieser riesigen Datenmenge aufzufinden. Search-Engines, wie z.B. die bekannten Internet-Search-Engines mit z.B. dem bekannten Altavista-Engine als wortbasierende Suchmaschine oder z.B. der Yahoo-Engine als topicbasierende Suchmaschine, machen die Vielzahl der dezentralisierten Datenquellen für den Benutzer erst nutzbar, da ohne solche Hilfsmittel die Aussicht, dass möglichst viele der relevanten Daten wirklich gefunden werden, drastisch sinkt. Es kann gesagt werden, dass das Internet ohne Search-Engines wie ein Kraftfahrzeug ohne Motor ist. Dies zeigt sich insbesondere in der statistischen Tatsache, dass die Benutzer des Internets mehr Online-Zeit bei Search-Engines verbringen, als irgendwo sonst. Trotz allen Fortschritten auf diesem Gebiet gibt die im Stand der Technik verfügbare Search-Engine-Technologie dem Benutzer jedoch häufig keine wirklich zufriedenstellenden Antworten. Als Beispiel sei angenommen, ein Benutzer möchte Informationen, z.B. zum Auto Model-Typ Fiat Uno finden, z.B. in Zusammenhang mit einer Haftungsklage einer Produktehaftung in Bezug auf ein fehlerhaftes Design mit technischen Folgen. Allgemeine Search-Engines werden zu diesem Thema typischerweise eine Vielzahl von irrelevanten Links zum Stichwort "Uno" oder "Fiat Uno" ergeben, da die Search-Engines den Context (in diesem Fall den rechtlich-juristischen Context), in welchem der Suchterm gefunden wird, nicht erkennen können. Dabei hilft auch häufig eine mögliche Kombination von Suchbegriffen nur wenig. Einer der Gründe dafür kommt daher, dass die Intemet-Search-Engines üblicherweise die Strategie des "Jedes Dokument ist relevant" verfolgen, weshalb sie versuchen, jedes zugreifbare Dokument zu erfassen und zu indexieren. Ihre Funktionsweise basiert immer auf dieser nicht editierten Auswahl von Dokumenten. Ein weiterer Nachteil der Search-Engines des Standes der Technik ist, dass die Hierarchie der gefundenen Dokumente durch den Anbieter leicht manipuliert werden kann (URL, Titel, Häufigkeit im Inhalt, Meta-Tags etc.), was ein verzehrtes Bild der gefundenen Dokumente ergibt Eine Klassifizierung der Dokumente durch den Provider ist vielleicht für einzelne wenige Gebiete möglich. Wegen der ungeheuren Menge an Daten und da die Informationen auf dem Netz schnell wechseln können (News-Groups, Portale etc.), ist es für einen Provider jedoch unmöglich, alle relevanten Dokumente zu allen aufkommenden Themen unmittelbar zu klassifizieren oder bezüglich ihres Inhaltes zu interpretieren. Noch schwieriger wird die Sachlage, wenn anstelle von konkreten Themen allgemeine Stimmungstendenzen, Meinungstendenzen oder Stimmungsschwankungen der Benutzer des Netzwerkes erfasst werden sollen. Z.B. kann es für eine Firma oder Industrie (beispielsweise Tabak, Chemie etc.) überlebenswichtig sein, frühzeitig die Möglichkeiten einer Class Action (USA) oder einer Haftungsklage gegen sich anhand von publizierten Dokumenten im Internet zu erfassen und entsprechende Vorkehrungen zu treffen. Gerade für solche Beispiele können die traditionellen Search-Engines nicht oder nur partiell eingesetzt werden. Insbesondere erlauben sie keine effektive Real-Time-Überwachung, was in einem solchen Fall notwendig sein kann.

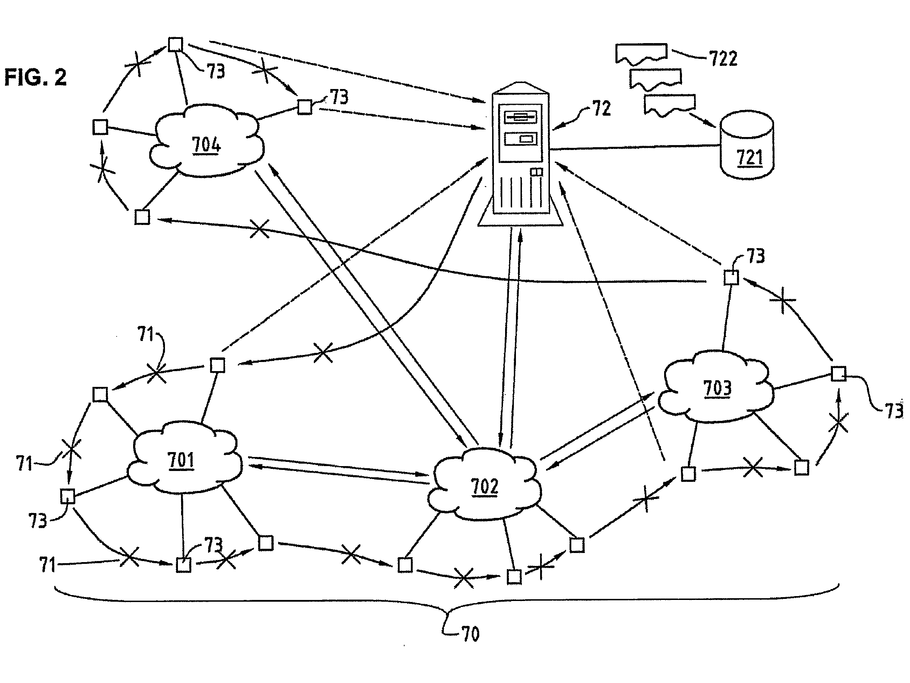

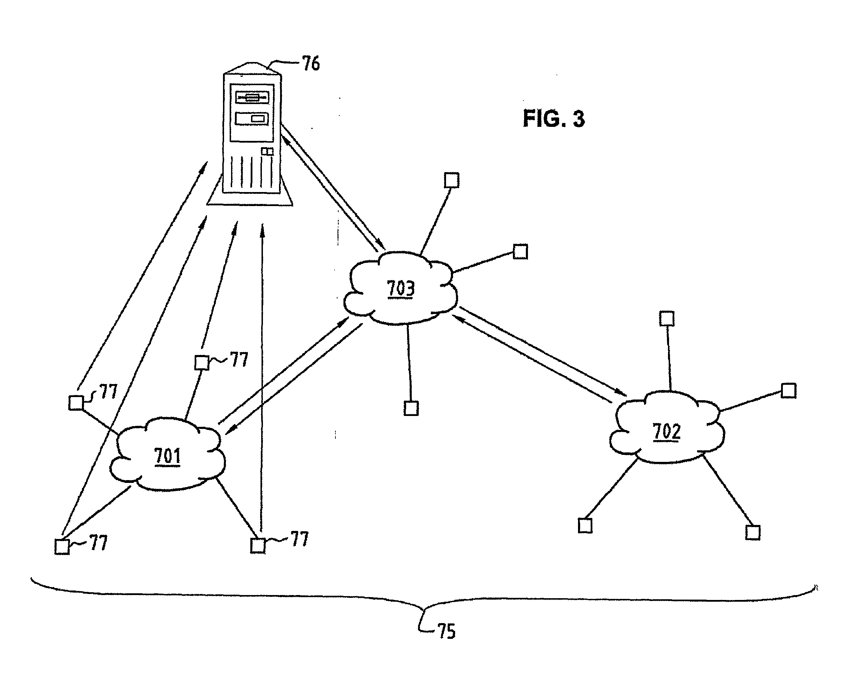

Es ist wichtig zu verstehen, dass der Term "Search-Engine" im Stand der Technik üblicherweise für verschiedene Typen von Suchmaschinen gebraucht wird. Die verfügbaren Search-Engines lassen sich grob in vier Kategorien unterteilen: Robots/Crawlers, Metacrawlers, Suchkataloge mit Suchmöglichkeiten und Kataloge oder Linksammlungen. Figur 2 zeigt die Funktionsweise von Robots/Crawlers. Search-Robots oder Crawlers zeichnen sich durch einen Prozess aus (d.h. den Crawler), welcher sich durch das Netzwerk 70, hier das Internet 701-704, von Netzwerk-Node 73 zu Netzwerk-Node 73 bzw. von Web-Site 73 zu Web-Site 73 bewegt (Pfeil 71) und dabei den Inhalt jedes Web-Dokumentes, welches er findet, an seinen Host-Rechner 72 zurückschickt. Der Host-Rechner 72 indexiert die durch den Crawler geschickten Web-Dokumente 722 und speichert die Information in einer Datenbank 721 ab. Jede Suchanfrage (Request) durch einen Benutzer greift auf die Informationen der Datenbank 721 zu. Die Crawlers des Standes der Technik betrachten normalerweise jede Information als relevant, weshalb alle irgendwo gefundenen Web-Dokumente durch den Host-Rechner 72 indexiert werden. Beispiele solcher Robots/Crawlers sind u.a. Google^{™}, Altavista^{™} und Hotbot^{™}. Figur 3 illustriert die sog. Metacrawlers. Metacrawlers unterscheiden sich von den Robots/Crawlers durch die Möglichkeit, mittels einer einzigen Sucheinrichtung 82 zu suchen, wobei die Antwort zusätzlich durch eine Vielzahl von weiteren Systemen 77 des Netzes 75 erzeugt wird. Der Metacrawler dient somit als ein Front-End zu einer Vielzahl von weiteren Systemen 77. Die Antwort auf einen Suchrequest von einem Metacrawler wird typischerweise durch die Anzahl seiner weiteren Systeme 77 begrenzt. Beispiele von Metacrawlers sind u.a. MetaCrawler^{™}, LawCrawler^{™} und LawRunner^{™}

Kataloge mit oder ohne Suchmöglichkeiten zeichnen sich durch eine spezielle Auswahl von Links aus, welche von Hand strukturiert und/oder organisiert und in einer entsprechenden Datenbank abgespeichert werden. Im Fall eines Kataloges mit Suchmöglichkeiten wird bei einem Suchrequest die manuell gespeicherte Information durch das System nach den gewünschten Suchtermen abgesucht. Im Fall eines Kataloges ohne Suchmöglichkeiten muss der Benutzer die gewünschte Information selbst aus der Liste der gespeicherten Links suchen, indem er z.B. manuell durch die Liste klickt oder scrollt. Im letzteren Fall entscheidet der Benutzer selbst, welche Information aus der Liste ihm relevant und welche ihm weniger relevant erscheint. Kataloge sind natürlicherweise durch das Leistungsvolumen und die Prioritäten des/der Editor(en) begrenzt. Beispiele solcher Kataloge sind u.a. Yahoo^{!}™ und FindLaw^{™}. Kataloge fallen unter die Kategorie der Portale und/oder Vortale. Portale und bis zu einem gewissen Mass z.B. auch proprietäre Datenbanken wie FindLaw.com^{™} oder WestLaw.com^{™} versuchen das Problem auf unterschiedliche Weise zu lösen. Portale versuchen manuell einen Überblick über ausgewählte Computer-Sites zu erhalten, indem sie Editoren durchs Internet "surfen" lassen, d.h. den Inhalt beurteilen lassen, und relevante Datenquellen oder Sites zusammenstellen lassen. Die Editoren können pro Tag im Schnitt etwa 10 bis 25 Sites durchsuchen, lesen und evaluieren, wobei von 25 meist nur gerade 1 oder 2 Sites Dokumente mit der gewünschten Qualität oder Information enthalten. Es leuchtet ein, dass Portale für den Anbieter (Provider) bezüglich Zeit-, Kosten- und Arbeitsaufwand sehr ineffizient sind, falls das Ziel eines Portals eine umfassende Indexierung aller verfügbaren Daten zu einem Thema im Internet sein soll. Aus diesem Grund ist es meist so, dass Internet-Portale auch nur Links zu den Start-/Hauptseiten der verschiedenen Sites angeben. Da das Datenangebot auf dem Internet einer starken Dynamik unterliegt, darf sogar gesagt werden, dass mit diesem Verfahren eine vollständige und aktuelle Erfassung aller verfügbaren Daten kaum je möglich sein wird. Unter Vertikale Portale, sog. Vortale, versteht man allgemein Portale, welche ihr Angebot/Auswahl an Informationen auf ein bestimmtes Gebiet beschränken. Vortale besitzen deshalb intrinsisch die gleichen Nachteile wie die oben diskutierten Portale. Im Gegenteil treten die genannten Nachteile bei Vortalen noch mehr in den Vordergrund, da durch ihre Themenbeschränkung der Anspruch an die Qualität und Genauigkeit des Indexierens viel höher angesetzt wird. Dies macht die Aufgabe des Suchens, Lesens und Beurteilens eines kritischen Masses an Informationen noch schwieriger und noch zeitaufwendiger. Ein Beispiel eines solchen Vortals ist u.a. FindLaw.com^{™}, das seit 1995 angeboten und entwickelt wird.

Die Search-Engines des Standes der Technik bestehen meistens aus einem Crawler und einer Eingabemöglichkeit (Front-End Query) für einen Benutzer. Typischerweise umfassen die Search-Engines weiter eine Datenbank mit abgespeicherten Links zu verschiedenen Web-Dokumenten oder Sites. Der Crawler wählt einen Link aus, lädt das Dokument herunter und speichert es in einen Datenspeicher. Danach wählt er den nächsten Link aus und lädt das Dokument ebenfalls in den Datenspeicher etc. etc.. Ein Indexingmodul liest eines der gespeicherten Dokumente vom Datenspeicher und analysiert seinen Inhalt (z.B. auf Wortbasis). Falls das Indexingmodul weitere Links in dem Dokument findet, speichert es sie in der Datenbank des Crawlers, so dass der Crawler die entsprechenden Dokumente später ebenfalls in den Datenspeicher laden kann. Wie der Inhalt des Dokumentes indexiert wird, hängt von der jeweiligen Suchmaschine ab. Die indexierte Information kann z.B. in einer Hash-Tabel oder einem anderen geeigneten Tool zur späteren Verwendung gespeichert werden. Ein Benutzer kann nun ein Suchrequest über das Front-End eingeben und die Search-Engine sucht die entsprechenden indexierten Seiten. Das Verfahren basiert auf dem Prinzip "Alles ist relevant", was bedeutet, dass der Crawler jedes Web-Dokument holen und speichern wird, das irgendwie zugreifbar ist. Komplexe, contentorientierte Abfragen sind mit den heutigen Suchmaschinen nicht durchführbar, ohne dass sie entweder relevante Dokumente ausschliessen oder eine Flut von für die Abfrage irrelevanten Dokumenten mit angeben. Gerade bei Suchabfragen, bei welchen Themen basierend auf themenfremden, nicht scharf fassbaren Parametern indexiert werden sollen, ergeben die Search-Engines kaum je auch nur annähernd befriedigende Antworten. Wie erwähnt, kann als ein Beispiel dazu das für die Industrie eminent wichtige Problem angeführt werden, dass zu einem konkreten Thema allgemeine Stimmungstendenzen, Meinungstendenzen oder Stimmungsschwankungen der Benutzer des Netzwerkes erfasst werden sollen. Dies ist basierend auf den heutigen Suchmaschinen nicht durchführbar. Ebenfalls ist es mit den Search-Engines des Standes der Technik bis anhin in keiner Weise möglich, Stimmungen und Stimmungsschwankungen der Netzwerkbenutzer zu einem Thema frühzeitig zu erkennen und die entsprechenden Dokumente anzugeben.

Die US-Patentanmeldung US2003/0195872 offenbart ein System, welches dazu benutzt werden kann, Suchbegriffe mit emotionellen Wertungsbegriffen zu verbinden und eine Suche im Internet und/oder Intranet basierend auf dieser Zuordnung von Suchbegriffen und emotionellen Wertungsbegriffen durchzuführen. Das System erlaubt jedoch kein gezieltes Screening von Datenbanken. Insbesondere sind keine zeitlichen Aussagen mittels des Systems möglich. Dies verhindert bzw. verunmöglicht eine objektive Beurteilung von Tendenzen oder zu erwartenden Ereignissen. Das System erlaubt lediglich ein statisches Listing von in den verfügbaren Datenbanken gespeicherten Dokumenten. Damit müssen alle relevanten Dokumente in diesem System doch mehr oder weniger vollständig nach dem Listing gelesen und interpretiert werden, was eine Automatisierung im Sinne z.B. eines dynamischen Warnsystems verunmöglicht.

Die US-Patentanmeldung US 2002/0120609 zeigt ein dreikomponentiges System, bestehend aus einer ersten technischen Einheit, welche kontinuierlich z.B. basierend auf einem benutzerspezifischen Profil sog. "Informons", eine Art Metadaten aus im Internet zugreifbaren Datenbanken aggregiert. Die Informons beinhalten für den bestimmten Benutzer Daten, welche von einem aktuellen oder zukünftigen Interessen für den Benutzer sein können. Mittels einer zweiten technischen Einheit, werden bei einem Suchrequest des Benutzers ebenfalls Informons aggregiert, wobei der momentane Suchrequest berücksichtigt wird. Mittels einer dritten Systemkomponente werden nun diejenigen Informons aus den aggregierten Informons selektiert, die dem Suchbegriff am nächsten kommen.

Es ist eine Aufgabe dieser Erfindung, ein neues System und ein Verfahren zur Aggregation und Analyse von dezentralisiert gespeicherten Multimediadaten vorzuschlagen, welche die oben genannten Nachteile des Standes der Technik nicht aufweisen. Insbesondere soll ein automatisiertes, einfaches und rationelles System und Verfahren vorgeschlagen werden, komplexe, contentorientierte Abfragen durchzuführen. Bei der Abfrage sollen insbesondere themenfremde und/oder nicht scharf fassbare Parameter, wie z.B. Stimmungen oder Stimmungsschwankungen der Netzbenutzer, als Filterparameter möglich sein. Umgekehrt soll mit dem erfindungsgemässen Verfahren und System ebenfalls möglich sein, Stimmungen und Stimmungsschwankungen der Netzwerkbenutzer zu einem Thema frühzeitig zu erkennen und die entsprechenden Dokumente anzugeben.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur Aggregation und Analyse von dezentralisiert gespeicherten Multimediadaten in einem Datenspeicher ein oder mehrere verknüpfbare Suchbegriffe abgespeichert werden, eine Recheneinheit über ein Netzwerk auf mit Quelldatenbanken verbundene Netzwerknodes zugreift und Daten der Quelldatenbanken basierend auf den Suchbegriffen selektiert werden, dass in einem Datenspeicher mindestens ein Wertungsparameter einem Suchbegriff und/oder einer Verknüpfung von Suchbegriffen zugeordnet abgespeichert wird, dass mittels eines Filtermoduls der Recheneinheit auf eine Vielzahl von Quelldatenbanken der Netzwerknodes zugegriffen wird und für jeden Wertungsparameter in Verbindung mit den zugeordneten Suchbegriffen eine Wertungsliste mit gefundenen Datensätzen erzeugt wird, wobei jedem der gefundenen Datensätze mindestens ein Quelldatenbankentyp und/oder eine Zeitangabe des Auftretens der Dokumente in der Quelldatenbank und/oder Ortsangaben der Quelldatenbank zugeordnet abgespeichert wird, dass mittels eines Parametrisierungsmodul basierend auf der Wertungsliste, den zugeordneten Quelldatenbankentyp und/oder der Zeitangaben und/oder Ortsangaben für den jeweiligen Wertungsparameter eine variable Stimmungsgrösse mindestens teilweise dynamisch generiert wird, welche variable Stimmungsgrösse zeitlichen z.B. positive und/oder negative Stimmungsschwankungen von Benutzern des Netzwerkes entsprechen. Dies hat u.a. den Vorteil, dass nicht nur Daten basierend auf einem Wertungsparameter aggregiert werden, sondern darüber hinaus die aggregierten entsprechende einem definierbaren oder dynamisch erzeugten Stimmungsparameter qualifiziert und quantifiziert werden können, dass heisst also vollständig automatisiert auf einem bis zu diesem Datum nicht möglichen Mass analysiert und aggregiert werden können. Die Quelldatenbankentypen können z.B: unterschiedliche News-Groups und/oder Mail-Foren und/oder WWW-Server und/oder Chat-Server und/oder Journal-Server und/oder Themenboards und/oder fachspezifische Datenbanken umfassen. Ein Überwachungsmodul kann z.B. basierend auf der variablen Stimmungsgrösse auf ein bestimmbares Ereignis triggern, wobei der Trigger in Abhängigkeit des zeitlichen Verlaufs der Stimmungsgrösse erfolgt. Dies hat u.a. den Vorteil, dass bevorstehende Ereignisse überwacht und z.B. auf ihre Auftretenswahrscheinlichkeit kontrolliert werden können. Mittels des Triggers z.B. basierend auf einem definierbaren Schwellwert lassen sich durch das System dann z.B. auch weitere System event-getriggert aktivieren. Solche Systeme könne neben Alarmierungssystemen, insbesondere auch Rettungssysteme, Verwaltungseinheiten (z.B. auch bei Risikomanagement von Portfolios etc. etc.) verwenden. Mittels eines Expertenmoduls des Parametrisierungsmoduls können z.B. neu auftretende Quelldatenbankentypen dynamisch erfasst werden, mittels Vergleich mit historischen Daten im zeitlichen Verlauf der Stimmungsgrössen gewichtet werden und dem Filtermodul zur Generierung der variablen Stimmungsgrösse zugeordnet werden. Die Recheneinheit kann z.B. zur Generierung der variablen Stimmungsgrössen und/oder der Daten des Contentmoduls ein HTML- (Hyper Text Markup Language) und/oder HDML- (Handheld Device Markup Language) und/oder WML- (Wireless Markup Language) und/oder VRML- (Virtual Reality Modeling Language) und/oder ASP (Active Server Pages) -Modul umfassen. Diese Ausführungsvariante hat u.a. den Vorteil, dass das System auf einer vorgängig spezifisch definierbaren Gesamtheit an Quellen aus einem Netzwerk, insbesondere aus dem Internet (z.B. Web-Sites, Chat Rooms, E-Mail Foren etc.) basiert, welche ebenfalls nach vorgängig definierbaren Suchkriterien gescannt werden. Das System ermöglicht also nicht nur die Generierung einer "Trefferliste" von im Internet gefundenen Web-Sites mit entsprechendem Inhalt, sondern das System ermöglicht das erwähnte Screening von vordefinierbaren Quellen und deren systematische und dadurch quantitativ relevante Auswertung entsprechend den gewünschten und definierten inhaltlichen Kriterien (z.B. welche Medikamente werden im Zusammenhang mit schweren Nebenwirkungen genannt - und die in welcher Häufigkeit). Dieses inhaltliche Screening kann in einer periodischen Abfolge (zeitlich) erfolgen, wobei sämtliche gefundenen 'Treffer'-Inhalte jederzeit wieder verfügbar gemacht werden können und somit statistische Aussagen, gerade eben über die Zeit, möglich sind. Natürlich können die Dokumente auch anderweitig auf ihre zeitliche Zuordnung, z.B. basierend auf dem Abspeicherungsdatum erfasst werden. Das System erkennt also auch, wann welcher Inhalt in den besagten Quellen abgelegt wurde. Dadurch, dass auf diese Art eine quantitative Auswertung möglich wird, kann das System die definierten Quellen selbständig 'monitoren' und ein überschreiten eines 'Treshold-Wertes' (quantitativ) entsprechend darstellen. Das System ermöglicht es, Suchkriterien so zu definieren, dass nach einem inhaltlichen logischen Zusammenhang (einen Sinn ergebend) gesucht werden kann (nicht nur das Stichwort zählt, sondern inhaltlicher Zusammenhang). Das System verbindet damit die Suchkriterien zu einem Inhalt, nach welchen dann gesucht wird.

In einer Ausführungsvariante werden ein oder mehrere der Wertungsparameter mittels einer lexikographischen Wertungsdatenbank generiert. Dasselbe kann für die Suchbegriffe realisiert sein. Diese Ausführungsvariante hat u.a. den Vorteil, dass Such- und Wertungsbegriffe benutzerspezifisch und/oder applikationsspezifisch definiert werden können. Als Ausführungsvariante kann die lexikographische Wertungsdatenbank und/oder Suchbegriffdatenbank dynamisch basierend auf bereits durchgeführten Suchen/Analysen ergänzt und/oder verändert werden. Damit kann das System an veränderte Bedingungen und/oder Wortbildungen automatisiert angepasst werden, was so im Stand der Technik nicht möglich war.

In einer anderen Ausführungsvariante werden ein oder mehrere der Wertungsparameter dynamisch mittels der Recheneinheit während der Erzeugung der Wertungsliste generiert. Diese Ausführungsvariante hat u.a. die gleichen Vorteile wie die vorhergehende Ausführungsvariante.

In einer weiteren Ausführungsvariante wird die Wertungsliste mit den gefundenen Datensätzen und/oder Verweisen auf die gefundenen Datensätze in einem Contentmodul der Recheneinheit für einen Benutzer zugreifbar abgespeichert. Diese Ausführungsvariante hat u.a. den Vorteil, dass das System z.B. als ein Warnsystem für den Benutzer eingesetzt werden kann, das ihn über bevorstehende Tendenzen im Markt oder der Bevölkerung ( z.B. Class Actions etc.) informiert und/oder warnt.

In einer Ausführungsvariante werden periodisch die Stimmungsgrössen mittels der Recheneinheit überprüft und falls mindestens eine der Stimmungsgrössen ausserhalb einer festlegbaren Schwankungstoleranz oder einer bestimmbaren Erwartungswertes liegt, die entsprechende Wertungsliste mit den gefundenen Datensätzen und/oder Verweisen auf gefundene Datensätze im Contentmodul der Recheneinheit für einen Benutzer zugreifbar abgespeichert und/oder aktualisiert. Diese Ausführungsvariante hat u.a. den Vorteil, dass die Datenbanken auf zeitliche Veränderungen oder zu erwartende Ereignisse, z.B. mittels definierbarem Wahrscheinlichkeitsschwellwert, gezielt gescannt werden können und den Benutzer so z.B. rechtzeitig warnen können (z.B. Produktefehler, Produktehaftung etc.).

In einer wieder anderen Ausführungsvariante wird ein Benutzerprofil anhand von Benutzerinformationen erstellt, wobei basierend auf den im Contentmodul abgespeicherten gefundenen Datensätzen und/oder Verweisen auf gefundene Datensätze mittels eines Repackagingmoduls unter Berücksichtigung der Daten des Benutzerprofils benutzerspezifisch optimierte Daten erzeugt werden, welche benutzerspezifisch optimierten Daten dem Benutzer im Contentmodul der Recheneinheit abgespeichert zur Verfügung gestellt werden. Dem Benutzer können als Ausführungsvariante verschiedene Benutzerprofile für unterschiedliche Kommunikationsvorrichtungen des Benutzers zugeordnet abgespeichert werden. Weiter können z.B. auch Daten zum Benutzerverhalten von der Recheneinheit automatisch erfasst und dem Benutzerprofil zugeordnet abgespeichert werden. Diese Ausführungsvariante hat u.a. den Vorteil, dass unterschiedliche Accessmöglichkeiten des Benutzers benutzerspezifisch berücksichtigt werden können und das System so benutzerspezifisch optimiert werden kann.

In einer Ausführungsvariante werden mittels eines Historymoduls zu jeder berechneten variablen Stimmungsgrösse die Werte bis zu einem festlegbaren vergangenen Zeitpunkt abgespeichert. Diese Ausführungsvariante hat u.a. die gleichen Vorteile einer zeitlichen Kontrolle und Erfassung von Veränderungen innerhalb der abgespeicherten und zugreifbaren Dokumente.

In einer weiteren Ausführungsvariante berechnet die Recheneinheit mittels eines Extrapolationsmoduls Erwartungswerte zu einer bestimmbaren Stimmungsgrösse basierend auf den Daten des Historymoduls für einen bestimmbaren zukünftigen Zeitpunkt und speichert sie in einem Datenspeicher der Recheneinheit ab. Diese Ausführungsvariante hat u.a. den Vorteil, dass zu erwartende Ereignisse automatisiert vorausgesagt werden können. Dies kann nicht nur bei Warnsystemen (z.B. gegen Class Actions bei Produktehaftung etc.) sinnvoll sein, sondern ganz allgemein bei Systemen, bei welchen eine statistisch-zeitliche Extrapolation wichtig ist, wie bei Risikomanagementsystemen an der Börse oder Finanzmärkten etc..

In einer wieder anderen Ausführungsvariante werden die ein oder mehreren verknüpfbaren Suchbegriffe mindestens teilweise dynamisch generiert werden. Alle entsprechenden Mittel können hardware- und/oder softwaremässig realisiert sein. Dies hat u.a. den Vorteil, dass neue Themen oder relevante Suchbegriffe dynamisch aufgenommen werden können, ohne dass sie vorgegeben werden müssen. Es ist sogar vorstellbar, dass damit nur ein grobes Themengebiet vorgegeben werden muss, wobei das System zuerst eine Kategorisierung und dann zu den entsprechenden Suchbegriffen die erfindungsgemässe Analyse und/oder Wertung der verfügbaren Dokumente durchführt. Neue Suchbegriffe könne mittels vollständig unterschiedlichen Verfahren und Systeme ermittelt werden. So kann z.B. die Häufigkeit in einem Dokument oder spezifischer Datenbanken, die Nähe zu anderen bereits aufgenommenen Suchbegriffen im Texten, der Vergleich mit relevanten Synonym Tabellen etc. etc. als Filter oder Teil von Mitteln zum Generieren neuer oder weiterer Suchbegriffe verwendet werden.

An dieser Stelle soll festgehalten werden, dass sich die vorliegende Erfindung neben dem erfindungsgemässen Verfahren auch auf ein System zur Ausführung dieses Verfahrens bezieht. Ferner beschränkt es sich nicht auf das genannte System und Verfahren, sondern bezieht sich ebenso auf ein Computerprogrammprodukt zur Realisierung des erfindungsgemässen Verfahrens.

Nachfolgend werden Ausführungsvarianten der vorliegenden Erfindung anhand von Beispielen beschrieben. Die Beispiele der Ausführungen werden durch folgende beigelegten Figuren illustriert:
Figur 1 zeigt ein Blockdiagramm, welches schematisch ein System zur Aggregation und Analyse von dezentralisiert gespeicherten Multimediadaten wiedergibt. In einem Datenspeicher 31 werden ein oder mehrere verknüpfbare Suchbegriffe 310,311,312,313 abgespeichert. Das System greift über ein Netzwerk 50 auf mit Quelldatenbanken 401,411,421,431 verbundene Netzwerknodes zu und Daten der Quelldatenbanken 401,411,421,431 basierend auf den Suchbegriffen 310,311,312,313 werden selektiert.
Figur 2 zeigt schematisch die Funktionsweise von Robots/Crawlers, Search-Robots oder Crawlers. Der Crawler bewegt sich durch das Netzwerk 70, hier das Internet 701-704, von Netzwerk-Node 73 zu Netzwerk-Node 73 bzw. von Web-Site 73 zu Web-Site 73 (Pfeil 71) und schickt dabei den Inhalt jedes Web-Dokumentes, welches er findet, an seinen Host-Rechner 72 zurück. Der Host-Rechner 72 indexiert die durch den Crawler geschickten Web-Dokumente 722 und speichert die Information in einer Datenbank 721 ab. Jede Suchanfrage (Request) durch einen Benutzer greift auf die Informationen der Datenbank 721 zu.
Figur 3 illustriert schematisch die Funktionsweise von Metacrawlers. Metacrawlers bieten die Möglichkeit, mittels einer einzigen Sucheinrichtung 82 zu suchen, wobei die Antwort zusätzlich durch eine Vielzahl von weiteren Systemen 77 des Netzes 75 erzeugt wird. Der Metacrawler dient somit als ein Front-End zu einer Vielzahl von weiteren Systemen 77. Die Antwort auf einen Suchrequest von einem Metacrawler wird typischerweise durch die Anzahl seiner weiteren Systeme 77 begrenzt.

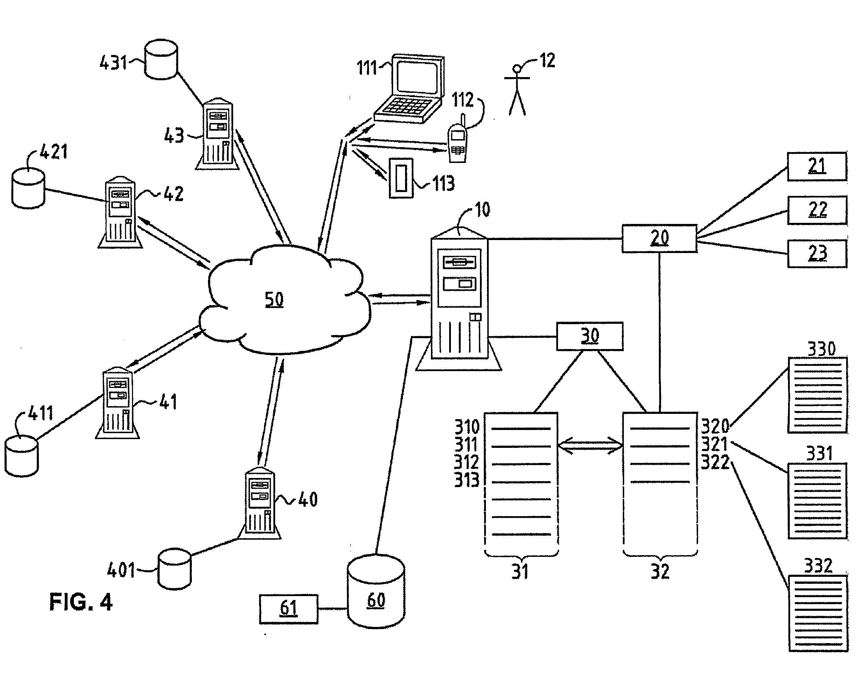

Figur 4 zeigt ein Blockdiagramm, welches schematisch ein System bzw. ein Verfahren zur Aggregation und Analyse von dezentralisiert gespeicherten Multimediadaten wiedergibt In einem Datenspeicher 31 werden ein oder mehrere verknüpfbare Suchbegriffe 310,311,312,313 abgespeichert. Eine Recheneinheit 10 greift über ein Netzwerk 50 auf mit Quelldatenbanken 401,411,421,431 verbundene Netzwerknodes 40,41,42,43 zu und Daten der Quelldatenbanken 401,411,421,431 basierend auf den Suchbegriffen 310,311,312,313 werden selektiert.
Figur 5 zeigt beispielhaft ein mögliches Ergebnis bei einem medizinischen und/oder pharmazeutischen Überwachungssystem basierend auf Medikamente in Abhängigkeit ihrer Trefferliste in den Dokumenten.
Figur 6 zeigt ebenfalls in einem solchen medizinischen und/oder pharmazeutischen Überwachungssystem beispielhaft ein mögliches Ergebnis z.B. eines Medikamentes in Zusammenhang mit auftretenden Krankheiten und/oder Todesursachen.
Figur 7 zeigt in der gleichen Ausführungsvariante von Figur 4 und 5 das zeitlich erfasste Auftreten am Beispiel von Serzone in den Dokumenten der verfügbaren und/oder bestimmten Quelldatenbanken 401,411,421,431.
Figur 8 zeigt ein beispielhaftes Listing von Firmen (hier z.B. Anwaltskanzleiseiten etc.) in Abhängigkeit von einer Selektion von Wertungs- und/oder Suchbegriffen 310,311,312,313 (hier z.B. Industrienamen) und ihrer Trefferzahl in den Dokumenten.
Figur 9 zeigt ebenfalls ein beispielhaftes Listing von Firmen (hier z.B. Anwaltskanzleiseiten etc.) in Abhängigkeit von einer Selektion von Wertungs- und/oder Suchbegriffen 310,311,312,313 (hier z.B. pharmazeutische Produkte) und ihrer Trefferzahl in den Dokumenten.
Figur 10 zeigt der zeitliche Ablauf eines Ereignisses, das zu einer Class Action gegen eine Firma führen kann. Die Spezifizierung des Systems entsprechend diesem Ablauf ermöglicht so z.B. eine zeitliche Überwachung und Warnung des Benutzers vor einer möglichen und/oder wahrscheinlichen Class Action.
Figur 11 zeigt das Listing von Firmennamen in Abhängigkeit von Wertungsbegriffen wie z.B. Klage etc. und ihrer Trefferzahl in Nachrichten oder E-Mails eines Forums.
Figur 12 zeigt das Listing in der gleichen Ausführungsvariante wie in Figur 10 allgemein nach Firmennamen.
Figur 13 zeigt das Listing in der gleichen Ausführungsvariante wie in Figur 10 und 11 nach Wertungsbegriffen wie z.B. pharmazeutische Produkte.
Figur 14 zeigt ein Listing der zeitlichen Schwankung der mittels des Systems durchgeführten Aggregation und/oder Analyse der Dokumente.

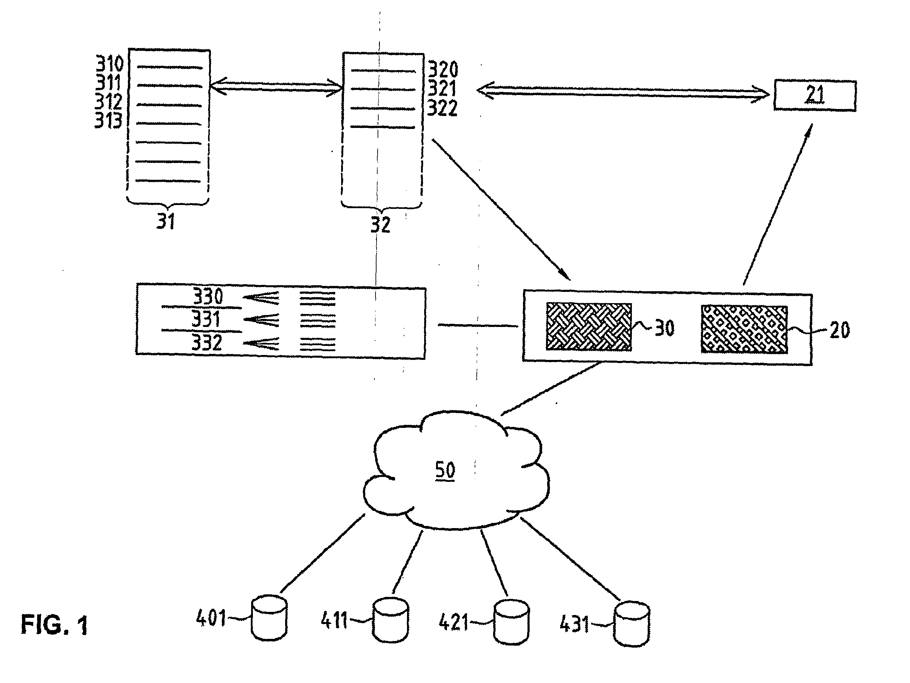

Figur 1 und 3 illustrieren schematisch eine Architektur, die zur Realisierung der Erfindung verwendet werden kann. In diesem Ausführungsbeispiel werden zur Aggregation und Analyse von dezentralisiert gespeicherten Multimediadaten in einem Datenspeicher 31 ein oder mehrere verknüpfbare Suchbegriffe 310,311,312,313 abgespeichert. Unter Multimediadaten sind u.a. digitale Daten wie Texte, Graphiken, Bilder, Karten, Animationen, bewegte Bilder, Video, Quicktime, Tonaufnahmen, Programme (Software), programmbegleitende Daten und Hyperlinks oder Verweise auf Multimediadaten zu verstehen. Dazu gehören z.B. auch MPx (MP3) oder MPEGx (MPEG4 oder 7) Standards, wie sie durch die Moving Picture Experts Group definiert werden. Insbesondere können die Multimediadaten Daten im HTML- (Hyper Text Markup Language), HDML- (Handheld Device Markup Language), WMD- (Wireless Markup Language), VRML- (Virtual Reality Modeling Language) oder XML- (Extensible Markup Language) Format umfassen. Eine Recheneinheit 10 greift über ein Netzwerk 50 auf mit Quelldatenbanken 401,411,421,431 verbundene Netzwerknodes 40,41,42,43 zu und Daten der Quelldatenbanken 401,411,421,431 werden basierend auf den Suchbegriffen 310,311,312,313 selektiert. Gemäss der vorliegenden Erfindung ist die Recheneinheit 10 mit den Netzwerknodes 40,41,42,43 über ein Kommunikationsnetz bidirektional verbunden. Das Kommunikationsnetz 50 umfasst beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen. Die Multimediadaten können, wie dargestellt, an unterschiedlichen Orten in unterschiedlichen Netzen oder lokal für die Recheneinheit 10 zugreifbar abgespeichert sein. Die Netzwerknodes 40,41,42,43 können WWW-Server (HTTP: Hyper Text Transfer Protocol / WAP: Wireless Application Protocol etc.), Chat-Server, E-Mail-Server (MIME), News-Server, E-Journal-Server, Group-Server oder beliebige andere File-Server, wie z.B. FTP-Server (FTP: File Transfer Protocol), ASD (Active Server Pages) basierende Server oder SQL basierende Server (SQL: Structured Query Language) etc. umfassen.

In einem Datenspeicher 32 der Recheneinheit 10 wird mindestens ein Wertungsparameter 320,321,322 einem Suchbegriff 310,311,312,313 und/oder einer Verknüpfung von Suchbegriffen 310,311,312,313 zugeordnet und abgespeichert. Der Suchbegriff 310,311,312,313 und/oder eine Verknüpfung von Suchbegriffen 310,311,312,313 umfasst den eigentlichen Suchbegriff. Um auf das erwähnte Beispiel des Fiat Uno zurückzukommen, würde der Suchbegriff 310,311,312,313 und/oder eine Verknüpfung von Suchbegriffen 310,311,312,313 folglich z.B. Fiat, Fiat Uno, Fiat AND/OR Uno FIAT etc. umfassen. Die Wertungsparameter 320,321,322 umfassen hingegen das Wertungsthema z.B. Class Action, Gerichtsfall etc. mit entsprechenden Wertungsattributen. Die Wertungsattribute können für ein Wertungsthema spezifisch sein, z.B. Schaden, Haftung, Versicherungssumme oder ganz allgemeine Wertungsurteile wie "gut", "schlecht", "wütend" etc., d.h. z.B. psychologische oder emotionelle Attribute oder Worte, welche eine solche Assoziierung zulassen, umfassen. Es ist wichtig darauf hinzuweisen, dass die Wertungsparameter 320,321,322 auch Einschränkungen bezüglich dem Netzwerk 50 und/oder spezifischen Netzwerknodes 40-43 umfassen können. Als Beispiel ist es dadurch möglich, die Aggregation und Analyse der Multimediadaten beispielsweise auf bestimmte News-Groups und/oder Web-Sites mittels entsprechender Wertungsparameter 320,321,322 einzuschränken. In diesem Ausführungsbeispiel können ein oder mehrere der Wertungsparameter 320,321,322 mittels einer lexikographischen oder einer anderen Wertungsdatenbank generiert werden. Ebenso kann es sinnvoll sein, dass die oder mehrere Wertungsparameter 320,321,322 mindestens teilweise dynamisch mittels der Recheneinheit 10 während der Erzeugung der Wertungsliste 330,331,332 generiert werden. Dynamisch kann z.B. bedeuten, dass das Parametrisierungsmodul 20 oder das Filtermodul 30 beim Indexieren und/oder zu einem späteren Zeitpunkt des Verfahrens die Multimediadaten und/oder die Daten der Wertungsliste 330,331,332 nach einem Wertungsparameter 320,321,322 assoziierbar überprüft und diese den Wertungsparametern 320,321,322 hinzufügt. Es kann in diesem Fall sinnvoll sein, dass die Wertungsparameter 320,321,322 durch den Benutzer 12 editierbar sind. Bei der dynamischen Erzeugung können insbesondere z.B. Analysemodule, basierend auf neuronalen Netzwerk-Algorithmen, sinnvoll sein.

Im Datenspeicher 32 kann mindestens eine der Quelldatenbanken 401,411,421,431 einem Suchbegriff 310,311,312,313 und/oder einer Verknüpfung von Suchbegriffen 310,311,312,313 zugeordnet abgespeichert werden. Die Zuordnung kann nicht nur explizite Netzwerkadressen und/oder Verweise von Datenbanken umfassen, sondern auch Kategorien und/oder Gruppen von Datenbanken, wie z.B. Web-Sites, Chat Rooms, E-Mail Foren etc. etc.. Die Zuordnung kann automatisiert, teilweise automatisiert, manuell und/oder basierend auf einem Benutzerprofil und/oder anderen benutzerspezifischen und/oder applikationsspezifischen Daten realisiert sein. Die Recheneinheit 10 greift mittels eines Filtermoduls 30 auf die Quelldatenbanken 401,411,421,431 der Netzwerknodes 40,41,42,43 zu und erzeugt für jeden Wertungsparameter 320,321,322 in Verbindung mit den zugeordneten Suchbegriffen 310,311,312,313 und/oder Quelldatenbanken 401,411,421,431 eine Wertungsliste 330,331,332 mit gefundenen Datensätzen. Es ist für den Fachmann unmittelbar, dass das Wertungsthema nicht unbedingt gleichrangig wie die Wertungsattribute beim Indexieren behandelt werden muss. Zur Erzeugung der Wertungsliste 330,331,332 basierend auf den Multimediadaten, können z.B. Metadaten, basierend auf dem Inhalt der Multimediadaten, durch ein Metadatenextraktionsmodul der Recheneinheit 10 generiert bzw. aggregiert werden. D.h., die Wertungsliste 330,331,332 kann damit solche Metadaten umfassen. Die Metadaten oder ganz allgemein die Daten der Wertungsliste 330,331,332 können z.B. anhand einer inhaltsbasierenden Indexingtechnik extrahiert werden und können Stichworte, Synonyme, Verweise auf Multimediadaten (z.B. auch Hyperlinks), Bild- und/oder Tonsequenzen etc. umfassen. Solche Systeme sind im Stand der Technik in unterschiedlichsten Variationen bekannt. Beispiele dafür sind die US-Patentschrift US 5 414 644, welche eine Drei-File-Indexingtechnik beschreibt oder die US-Patentschrift US 5 210 868, welche bei dem Indexieren der Multimediadaten und Extrahieren der Metadaten zusätzlich auch Synonyme als Such-Keywords abspeichert. Im vorliegenden Ausführungsbeispiel können die Metadaten aber auch mindestens teilweise dynamisch (in Real-Time), basierend auf Benutzerdaten eines Benutzerprofils, erzeugt werden. Dies hat z.B. den Vorteil, dass die Metadaten immer die für den Benutzer 12 sinnvolle Aktualität und Genauigkeit besitzen. Vom Benutzerverhalten an der Kommunikationsvorrichtung 111, 112, 113 zum Metadatenextraktionsmodul existiert also eine Art Feedbackmöglichkeit, die die Extraktion direkt beeinflussen kann. Es können aber auch, insbesondere bei der Suche bestimmter Daten, sog. Agents eingesetzt werden.

Das genannte Benutzerprofil kann z.B. anhand von Benutzerinformationen erstellt und in der Recheneinheit 10 dem Benutzer 12 zugeordnet abgespeichert sein. Das Benutzerprofil bleibt entweder permanent einem bestimmten Benutzer 12 zugeordnet abgespeichert oder wird temporär erstellt. Die Kommunikationsvorrichtung 11/112/113 des Benutzers kann beispielsweise ein PC (Personal Computer), TV, PDA (Personal Digital Assistant) oder ein Mobilfunkgerät sein (insbesondere z.B. in Kombination mit einem Broadcastempfänger). Das Benutzerprofil kann Informationen über einen Benutzer, wie z.B. Ort der Kommunikationseinheit 111/112/113 des Benutzers im Netzwerk, Identität des Benutzers, benutzerspezifische Netzwerkeigenschaften, benutzerspezifische Hardwareeigenschaften, Daten zum Benutzerverhalten etc. umfassen. Der Benutzer 12 kann vorgängig zu einer Suchanfrage mindestens Teile von Benutzerdaten des Benutzerprofils festlegen und/oder modifizieren. Natürlich bleibt dem Benutzer 12 stets die Möglichkeit, Multimediadaten durch direkten Zugriff, also ohne Such- und Zusammenstellhilfe der Recheneinheit 10 im Netz zu suchen und auf sie zuzugreifen. Die übrigen Daten des Benutzerprofils können automatisch durch die Recheneinheit 10, durch autorisierte Dritte oder ebenfalls vom Benutzer bestimmt sein. So kann die Recheneinheit 10 z.B. automatische Anschlusserkennung, Benutzeridentifizierung und/oder automatisches Aufzeichnen und Auswerten des Benutzerverhaltens (Zeit des Zugriffs, Häufigkeit des Zugriffs etc.) umfassen. Diese Daten zum Benutzerverhalten können in einer Ausführungsvariante dann wiederum vom Benutzer entsprechend seinen Wünschen modifizierbar sein.

Mittels eines Parametrisierungsmoduls 20 wird, basierend auf der Wertungsliste 330,331,332, für den jeweiligen Wertungsparameter 320,321,322 eine variable Stimmungsgrösse 21 mindestens teilweise dynamisch generiert. Zur Generierung der variablen Stimmungsgrössen 21 und/oder der Daten des Contentmoduls 60 kann z.B. HTML und/oder HDML und/oder WML und/oder VRML und/oder ASD verwendet werden. Die variable Stimmungsgrösse 21 entspricht positiven und/oder negativen Stimmungsschwankungen von Benutzern des Netzwerkes 50. Die variable Stimmungsgrösse 21 kann ebenfalls für ein Wertungsthema spezifisch sein. Z.B. kann die variable Stimmungsgrösse 21 die Wahrscheinlichkeit für eine Class Action gegen eine bestimmte Firma und/oder ein bestimmtes Produkt wiedergeben oder nur z.B. bei einem Medikament eine allgemeine Nützlichkeitseinstufung von den Benutzern oder einer spezifischen Untergruppe wie Ärzte und/oder anderes medizinisches Fachpersonal. Als Ausführungsbeispiel kann die Wertungsliste 330,331,332 mit den gefundenen Datensätzen und/oder Verweisen auf gefundene Datensätze in einem Contentmodul 60 der Recheneinheit 10 für einen Benutzer zugreifbar abgespeichert werden. Um auf das Contentmodul 60 zugreifen zu können, kann es sinnvoll sein (z.B. zum Verrechnen der beanspruchten Dienstleistung), einen bestimmten Benutzer 12 von der Recheneinheit 10 mittels einer Benutzerdatenbank zu identifizieren. Zur Identifikation können z.B. Personal Identification Numbers (PIN) und/oder so genannte Smartcards verwendet werden. Smartcards setzen im Normalfall ein Kartenlesegerät bei der Kommunikationsvorrichtung 111/112/113 voraus. In beiden Fällen wird der Name oder eine andere Identifikation des Benutzers 12 sowie die PIN zur Recheneinheit 10 oder einem trusted Remote-Server übermittelt. Ein Identifikationsmodul bzw. Authentifikationsmodul entschlüsselt (falls notwendig) und überprüft die PIN über die Benutzerdatenbank. Kreditkarten können als Ausführungsvariante ebenfalls zur Identifikation des Benutzers 12 verwendet werden. Verwendet der Benutzer 12 seine Kreditkarte, kann er ebenfalls seinen PIN eingeben. Typischerweise enthält der Magnetstreifen der Kreditkarte die Kontonummer und die verschlüsselte PIN des autorisierten Inhabers, d.h. in diesem Fall des Benutzers 12. Die Entschlüsselung kann direkt im Kartenlesegerät selbst erfolgen, wie im Stand der Technik üblich. Smartcards haben den Vorteil, dass sie eine grössere Sicherheit vor Betrug durch eine zusätzliche Verschlüsselung der PIN erlauben. Diese Verschlüsselung kann entweder durch einen dynamischen Zahlenschlüssel, welcher z.B. Zeit, Tag oder Monat enthält oder einen anderen Algorithmus erfolgen. Die Entschlüsselung und Identifikation geschieht nicht im Gerät selbst, sondern extern über das Identifikationsmodul. Eine weitere Möglichkeit bildet eine direkt in die Kommunikationsvorrichtung 111/112/113 eingeführte Chipkarte. Bei der Chipkarte kann es sich z.B. um SIM-Karten (Subscriber Identification Module) oder Smart-Cards handeln, wobei den Chipkarten jeweils eine Rufnummer zugeordnet ist. Die Zuordnung kann z.B. über ein HLR (Home Location Register) erfolgen, indem im HRL die IMSI (International Mobile Subscriber Identification) einer Rufnummer z.B. einer MSISDN (Mobile Subscriber ISDN) zugeordnet abgespeichert ist Über diese Zuordnung ist dann eine eindeutige Identifikation des Benutzers 12 möglich.

Um eine Suchabfrage zu starten, übermittelt z.B. ein Benutzer 12 über ein Front-End ein Search-Request für die entsprechende Abfrage von der Kommunikationsvorrichtung 111/112/113 über das Netzwerk 50 an die Recheneinheit. Die Search-Request-Daten können über Eingabeelemente der Kommunikationsvorrichtung 111/112/113 eingegeben werden. Die Eingabeelemente können z.B. Tastaturen, graphische Eingabemittel (Maus, Trackball, Eyetracker bei Virtual Retinal Display (VRD) etc.), aber auch IVR (Interactive Voice Response) etc. umfassen. Der Benutzer 12 hat die Möglichkeit, mindestens einen Teil der Search-Request-Daten selber zu bestimmen. Dies kann z.B. dadurch geschehen, dass der Benutzer durch die Empfangsvorrichtung 111/112/113 aufgefordert wird, ein entsprechendes Front-End-Query über ein Interface auszufüllen. Das Front-End-Query kann insbesondere eine zusätzliche Authentifikation und/oder Gebühren für die Abfrage umfassen. In der Recheneinheit 10 werden die Search-Request-Daten überprüft und, falls sie bestimmbaren Kriterien genügen, wird die Suche ausgeführt. Um eine möglichst gute Aktualität der Daten zu erhalten oder um eine permanente Überwachung des Netzes zu erreichen, können z.B. die Stimmungsgrössen 21 mittels der Recheneinheit 10 periodisch überprüft werden und falls mindestens eine der Stimmungsgrössen 21 ausserhalb einer festlegbaren Schwankungstoleranz oder eines bestimmbaren Erwartungswertes liegt, die entsprechende Wertungsliste 330,331,332 mit den gefundenen Datensätzen und/oder Verweisen auf gefundene Datensätze im Contentmodul 60 der Recheneinheit 10 für einen Benutzer zugreifbar abgespeichert und/oder aktualisiert werden. Für benutzerspezifische Anforderungen kann es sinnvoll sein, dass z.B. ein Benutzerprofil anhand von Benutzerinformationen erstellt wird, wobei z.B. basierend auf den im Contentmodul 60 abgespeicherten gefundenen Datensätzen und/oder Verweisen auf gefundene Datensätze mittels eines Repackagingmoduls 61 unter Berücksichtigung der Daten des Benutzerprofils benutzerspezifisch optimierte Daten erzeugt werden. Die benutzerspezifisch optimierten Daten können dann z.B. dem Benutzer 12 im Contentmodul 60 der Recheneinheit 10 abgespeichert zur Verfügung gestellt werden. Es kann vorteilhaft sein, dass einem Benutzer 12 verschiedene Benutzerprofile für unterschiedliche Kommunikationsvorrichtungen 111,112,113 dieses Benutzers 12 zugeordnet abgespeichert werden. Für das Benutzerprofil können z.B. auch Daten zum Benutzerverhalten von der Recheneinheit 10 automatisch erfasst und dem Benutzerprofil zugeordnet abgespeichert werden.

Es ist wichtig darauf hinzuweisen, dass als Ausführungsvariante mittels eines Historymoduls 22 zu jeder berechneten variablen Stimmungsgrösse 21 die Werte bis zu einem festlegbaren vergangenen Zeitpunkt abgespeichert werden können. Dies erlaubt, dass z.B. die Recheneinheit 10 mittels eines Extrapolationsmoduls 23 Erwartungswerte zu einer bestimmbaren Stimmungsgrösse 21 basierend auf den Daten des Historymoduls 22 für einen bestimmbaren zukünftigen Zeitpunkt berechet und in einem Datenspeicher der Recheneinheit 10 abspeichert. Der Benutzer 12 kann damit nicht nur über aktuelle Stimmungsschwankungen oder Stimmungsveränderungen informiert werden, sondern er kann auch auf Erwartungswerte für zukünftiges Verhalten der Benutzer des Netzwerkes zugreifen und sich entsprechend einstellen.

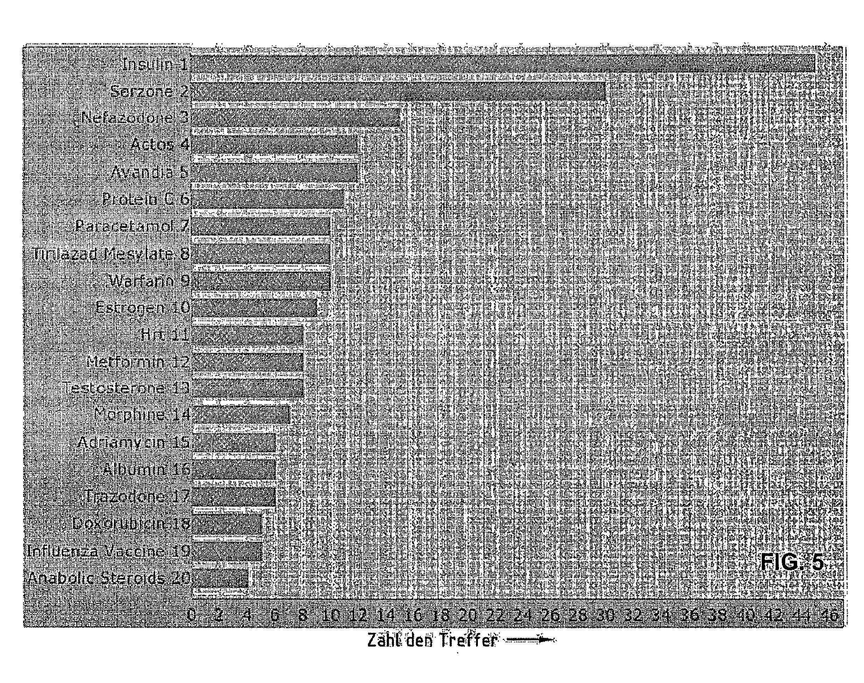

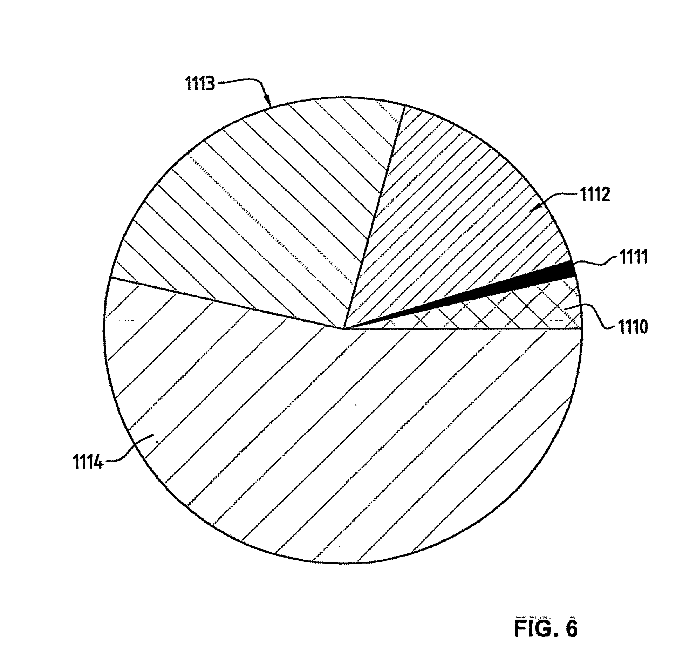

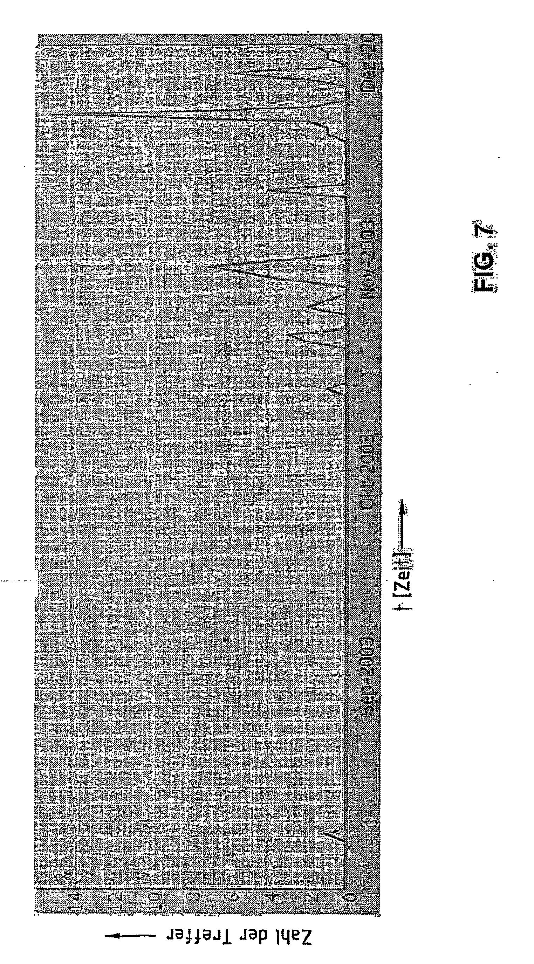

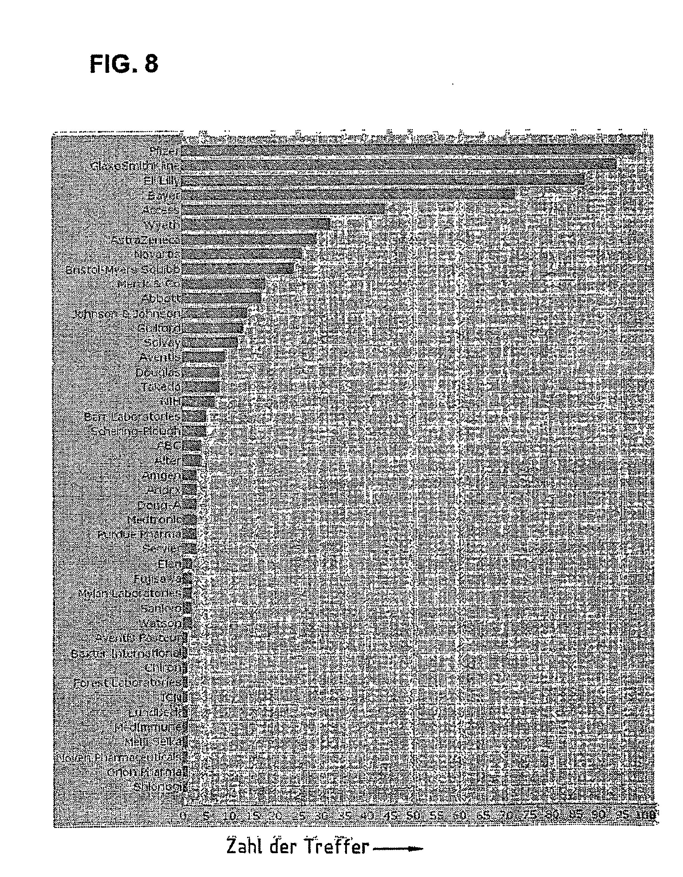

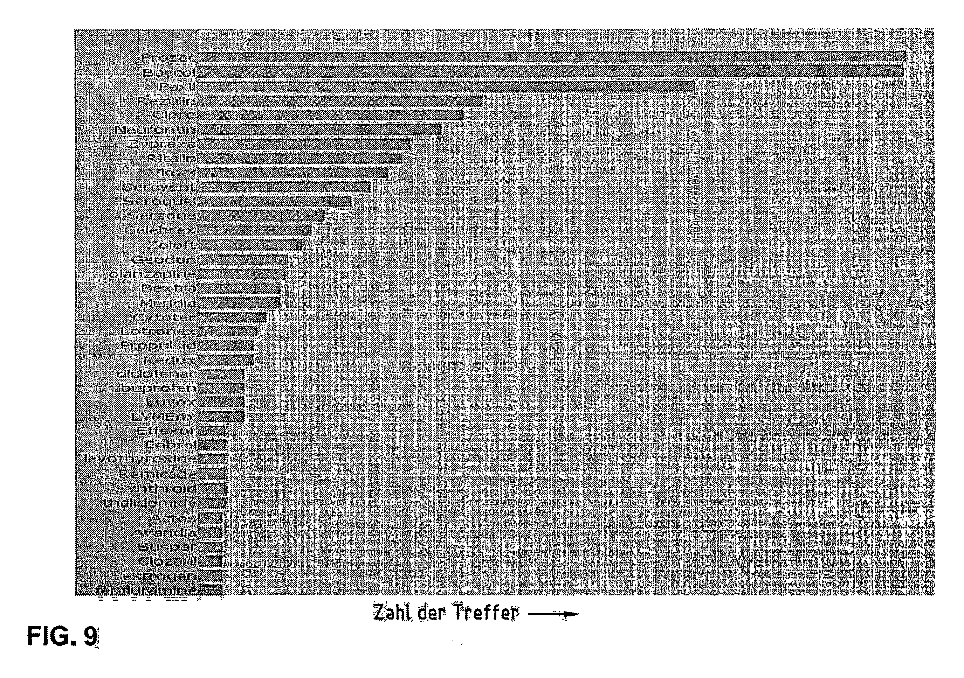

Figur 5 bis 9 zeigen eine Ausführungsvariante zur Meinungsüberwachung von pharmazeutischen und/oder medizinischen Produkten und Warnung der Firma vor bevorstehenden Produktehaftungsfällen und/oder Class Actions oder anderen Gerichtsfällen. Die Ausführungsvariante soll ein Realtime-Monitoren der öffentlichen Diskussion auf Seiteneffekte und/oder Nebenwirkungen eines Medikamentes oder pharmazeutischen Produktes z.B. im weltweiten Backbone-Netzwerk, dem Internet, erlauben. Mit der Ausführungsvariante wurden in einem Beispiel mehr als 2500 Medikamente und pharmazeutischen Produkte in mehr als 10'000 öffentlichen (public topic related) News-Channels auf dem Internet überwacht. Dies war bis anhin im Stand der Technik so nicht möglich. In diesem Beispiel wurden als Nebenwirkungen Leberschäden, Nierenschäden, Herzschäden, Himschäden, durch das Medikament induzierte Depressionen mit Selbstmordfolgen sowie allergische Reaktionen als Wertungsbegriffe und/oder Suchkombinationsbegriffe in Zusammenhang mit dem Medikament und/oder pharmazeutischen Produkt benutzt. Figur 5 zeigt beispielhaft eines der Ergebnisse des medizinischen und/oder pharmazeutischen Überwachungssystem basierend auf Medikamente in Abhängigkeit ihrer Trefferliste in den Dokumenten. Figur 6 zeigt ebenfalls beispielhaft eines der Ergebnisse bzw. Zwischenergebnisse im System eines Medikamentes in Zusammenhang mit auftretenden Krankheiten und/oder Todesursachen. Die Referenznummer 1110 entspricht den Leberschäden mit 3.9 % mit 11 vom System in diesem Zusammenhang als relevant beurteilten Fundstellen in den Dokumenten. Die Referenznummer 1111 entspricht den Nierenschäden mit 1.1 % mit 3 vom System als relevant beurteilten Fundstellen in den Dokumenten. Die Referenznummer 1112 entspricht den Herzschäden mit 16.1 % mit 46 vom System als relevant beurteilten Fundstellen in den Dokumenten. Die Referenznummer 1113 entspricht den Hirnschäden mit 25.3 % mit 72 vom System als relevant beurteilten Fundstellen in den Dokumenten. Die Referenznummer 1114 entspricht den depressionsbedingten Selbstmorden mit 53.7 % mit 153 vom System als relevant beurteilten Fundstellen in den Dokumenten. Figur 7 zeigt in der gleichen Ausführungsvariante von Figur 5 und 6 das zeitlich erfasste Auftreten am Beispiel des Medikamentes Serzone in den Dokumenten der verfügbaren und/oder bestimmten Quelldatenbanken 401,411,421,431. Die Relevanz konnte bei allen gefunden Dokumenten nachgewiesen werden. Mit dem System können damit z.B. auch neue Datenquellen dynamisch gefunden werden. Das System kann insbesondere als Frühwarnsystem für Firmen eingesetzt werden. Mehrsprachige Wertungen und/oder Analysen können z.B. mit dem System ebenfalls durchgeführt werden, u.a. durch Anpassungen (z.B. manuell/automatisiert und/oder dynamisch durch das System etc.) der Wertungs- und/oder Suchbegriffdatenbanken etc.. Die Überwachung kann mittels des erfindungsgemässen Systems einfach auf bevorstehende und/oder zu erwartende Class Actions und/oder andere Gerichtsstreitigkeiten z.B. basierend auf Produktehaftung ausgedehnt werden, indem insbesondere Anwaltskanzleiseiten und/oder öffentliche Seiten betreffend Rechtsfragen periodisch oder zeitlich gestaffelt überwacht werden. Figur 8 zeigt ein beispielhaftes Listing von Firmen (hier z.B. Anwaltskanzleiseiten etc.) in Abhängigkeit von einer Selektion von Wertungs- und/oder Suchbegriffen 310,311,312,313 (hier z.B. Industrienamen) und ihrer Trefferzahl in den Dokumenten in diesem Ausführungsbeispiel. Figur 9 zeigt ebenfalls ein solches Listing von Firmen (hier z.B. Anwaltskanzleiseiten etc.) in Abhängigkeit von einer Selektion von Wertungs- und/oder Suchbegriffen 310,311,312,313 (hier z.B. pharmazeutische Produkte) und ihrer Trefferzahl in den Dokumenten.

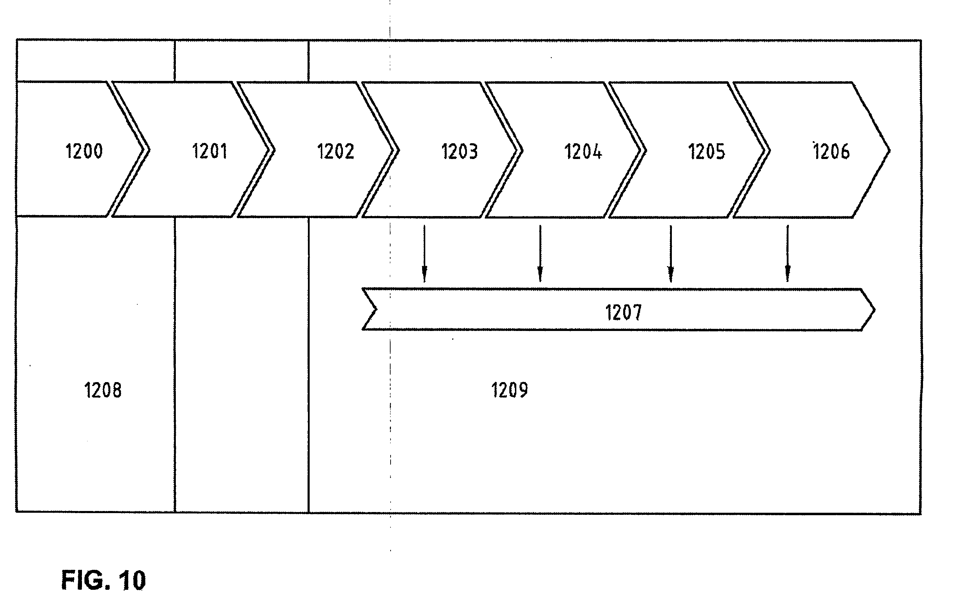

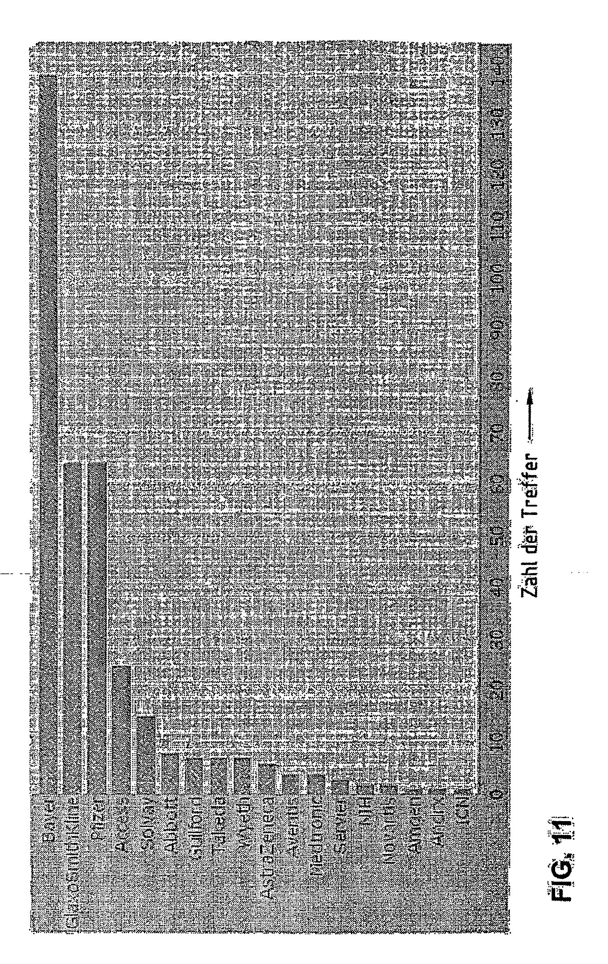

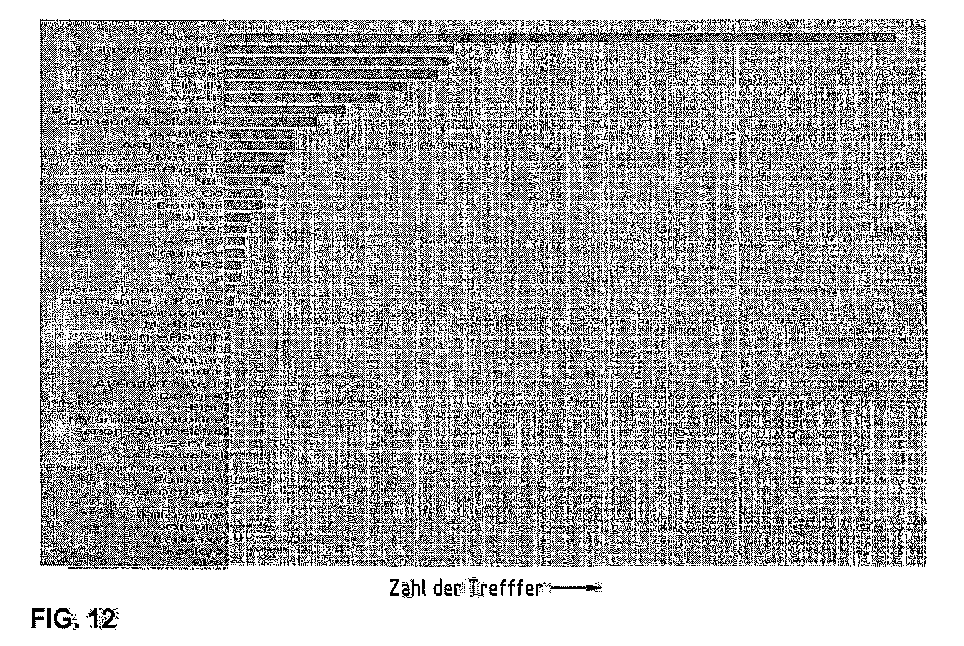

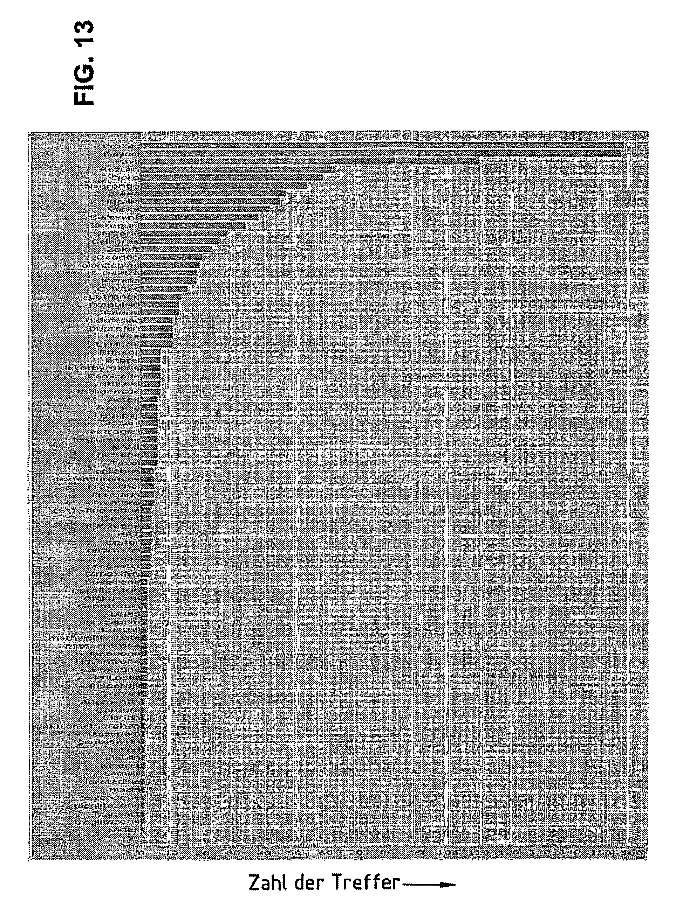

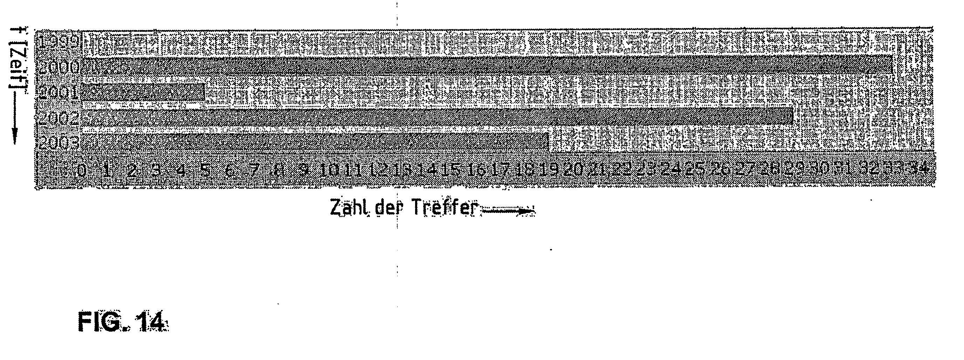

Figuren 10 bis 14 zeigen ein Ausführungsbeispiel für ein Frühwarnsystem betreffend bevorstehenden Class Actions oder anderen Gerichtsstreitigkeiten gegen Firmen. Um ein solches System z.B. zur Überwachung eines oder mehrerer Produkte einer Firma entsprechend aufzusetzen, kann es sinnvoll sein, den Prozess in den wesentlichen Zügen zu verstehen. Figur 10 zeigt der zeitliche Ablauf eines Ereignisses, das zu einer Class Action gegen eine Firma führen kann. Die Referenznummern 2008 und 2009 umfassen zwei zeitliche Stadien im Verlauf vor dem Einreichen einer Class Action. In 2008 entsteht eine erste Diskussion um Nebenwirkungen eines Produktes in der Öffentlichkeit bzw. in dem bestimmten Forum. Zu dieser Zeit kann eine Frühwarnung der betroffenen Firma wichtig sein. In 2009 beginnt die rechtliche und juristische Diskussion in den Foren (z.B. juristische Web-Sites etc.), die schlussendlich zum Einreichen der Class Action führt. Zu dieser Zeit kann eine juristische Warnung an die Firma überlebenswichtig sein. 1200 ist der frühe Beginn um Nebenwirkungen und/oder Seiteneffekte bei einem Produkt z.B. in öffentlichen Email-Foren und/oder News-Gruppen. In 1201 setzt zeitlich eine erste Diskussion um rechtliche Aspekte in den Foren ein. In 1202 beginnen rechtliche Schritte vorbereitet zu werden. In 1203 werden erste Forderungen, wie z.B. Schadensersatzforderungen, an die Firma übermittelt. In 1204 wird die Class Action gegen die Firma eingereicht. In 1205 wird die Class Action entweder vom Gericht zugelassen oder aus rechtlichen Gründen abgewiesen. In 1206 erfolgt schliesslich das Urteil der gerichtlichen Behörden in diesem Fall. Während 1203, 1204 1205 oder 1206 kann von den Parteien mit 1207 eine aussergerichtliche Einigung bzw. Streitbeilegung in dieser Sache jederzeit erfolgen, was die Diskussion beenden würde. Eine solche rechtliche Entwicklung kann z.B. mittels Überwachung von juristischen Foren und Anwaltskanzlei-Websites etc. erreicht werden. Diese Foren bzw. Websites werden damit zu vorbestimmten Quelldatenbanken 401,411,421,431. In diesem Ausführungsbeispiel wurden vom erfindungsgemässen System z.B. 15'000 Websites von Anwälten überwacht, 2'500 Produkte von Firmen und 450 Hersteller von pharmazeutischen Produkten. Dies war so im Stand der Technik nicht möglich. Die Spezifizierung des Systems entspricht dem Ablauf nach Figur 10 und ermöglicht so z.B. eine zeitliche Überwachung und Warnung des Benutzers vor einer möglichen und/oder wahrscheinlichen Class Action. Figur 11 zeigt das Listing von Firmennamen in Abhängigkeit von Wertungsbegriffen wie z.B. Klage etc. und/oder Produkten und ihrer Trefferzahl in Nachrichten oder Emails eines Forums. Figur 12 zeigt das Listing in der gleichen Ausführungsvariante wie in Figur 11 allgemein nach Firmennamen. Figur 13 zeigt das Listing in der gleichen Ausführungsvariante wie in Figur 11 und 12 nach Wertungsbegriffen wie z.B. pharmazeutische Produkte. Figur 14 zeigt ein Listing der zeitlichen Schwankung der mittels des Systems durchgeführten Aggregation und/oder Analyse der Dokumente. Die Relevanz bzw. Korrelation der gezeigten Diagrammbalken mit den Ereignissen konnte für das erfindungsgemässe System in allen Fällen gezeigt werden. Im Stand der Technik kann zur Zeit kein vergleichbares automatisiertes System zur Überwachung und/oder Frühwarnung/-erkennung gefunden werden.

Abgesehen von den beschriebenen Ausführungsbeispielen ist klar, dass das System viele mögliche Anwendungen hat, ohne dass sie durch die beschriebenen Ausführungsbeispiele in irgendeiner Weise eingeschränkt werden sollen. Weitere Anwendungsbeispiele sind beispielsweise Systeme zum Unfallmonitoring bei der Erfassung von Unfällen und/oder Unfallmeldungen z.B. der Öl- und Petroindustrie, der Chemie-Industrie, bei Autobussen etc.. Das System kann u.a. Identifikation und Zuordnung von Meldungen über verschiedene nicht genauer spezifizierte Merkmale umfassen. Solche Meldungen können u.a. Datum und/oder Ort und/oder Unfalltyp umfassen. Weiter Möglichkeiten sind: EMF-Systeme zum Erfassen von Meldungen über EMF betreffend ihrer wissenschaftlichen und/oder politischen und/oder juristische Ausprägungen und Auswirkungen. Solche Systeme können z.B. die Identifikation und Zuordnung der Meldungen über genau spezifizierte Merkmale: z.B. Firma und Topic (z.B. Leber) umfassen. Weiter D&O Financial Risk System zur Früherkennung und/oder Überwachung von Firmen, die mit einem erhöhten D&O Financial Risk ausgestattet sind. Die Identifikation der Früherkennung mittels des Systems kann einen quantitativen Vergleich von Meldungen in verschiedenen Quellentypen, z.B. Chat und/oder Newspapers umfassen. Z.B. auch Systeme zur automatisierten Erstellung von Unfallatlanten, die z.B. sämtliche Unfallmeldungen (z.B. Busunglücke) und deren Zuordnung zu geographischen Orten, Zeit und Unfallfolgen umfassen. Die eben beschriebenen Systeme können insbesondere bei Systemen in der Versicherungs- und/oder Rückversicherungsindustrie eingesetzt werden. Andere Möglichkeiten sind z.B. im Immobilienmarketing zur Identifizierung und Strukturierung von Marktinformationen zu bestimmten Unterthemen und/oder Strukturierung nach PLZ und/oder nach Anbieter und/oder Produkt. Dies kann z.B. auch die Extraktion und Strukturierung von nicht genauer spezifizierten Attributen (z.B. Zinssätze der Konkurrenz) umfassen. Dann Immobilienmarkt-Monitoring Systeme, wobei mittels des Systems Marktinformationen erfasst und strukturiert werden können, so dass der Hypothekarverkäufer und/oder Bauzulieferer etc. frühest möglich einen vollständigen Marktüberblick mit allen verfügbaren Informationen erhält. Weiter kann das System als Geldwäscherei-Tool realisiert werden zur Identifizierung von Personen und ihren gesamten, öffentlich bekannten Netzwerken sowie zum Erstellen von Personen profilen im Hinblick auf definierte Themen. Das System kann dabei z.B. auch die Identifikation von nicht spezifizierten Personen mit einem spezifizierten Profil umfassen. In einer anderen Ausprägung kann das System als Performance-Tool zur Analyse sämtlicher Informationen, die für die Performance einer Firma relevant sind (harte und weiche Faktoren und Daten; Generierung von Realtime-Indikatoren, die aus einer Vielzahl von Basisdaten ermittelt werden) verwendet werden. Bei automatisierten Systemen wie Jobportale kann das System die automatische Erkennung und Erfassung von neuen Jobs auf Firmen-Websites sowie Transfer dieser Jobinformationen in eine andere Datenbank umfassen z.B. mittels automatisierter Extraktion und Strukturierung von nicht genau spezifizierten Attributen (z.B. Job Titel, Job Beschreibung, Job Adresse). Das System kann ebenfalls zum automatisierten Issuemanagement verwendet werden, z.B. bei der Identifizierung von kritischen Themen für eine Firma, Identifizierung von neuen Subissues, Identifizierung neuer Stakeholders etc.. Die Identifikation kann z.B. nicht spezifizierte Topics mit einem spezifizierten Profil umfassen. In anderen Systemen (z.B. bei Headhunters) kann mittels des Systems eine automatisierte Personenidentifikation realisiert sein, wobei nicht spezifizierte Personen z.B. mit einem bestimmbaren Profil identifiziert werden. In einem anderen Ausführungsbeispiel kann das System zum automatisierten Webclipping verwendet werden, z.B. zur Erfassung aller webbasierter Informationen zu einem Thema (z.B. Institution) und/oder Unterthemen, Identifizierung der Herkunft (Land/Sprache), technischer Kanal, des Autors, der Bewertung (positiv/Negativ) etc.. Ebenso kann als Ausführungsbeispiel mittels des Systems ein automatisiertes Customer Relation Monitoring realisiert werden, insbesondere zur Überwachung und Erfassung sämtlicher Äusserungen der Kunden betreffend der Adressaten, der Themen und der Bewertungen etc.. Weiter sind als Ausführungsbeispiele Systeme zum automatisierten Brand-Monitoring vorstellbar, wobei eine Überwachung der Brand-Nutzung durch die eigene Firma oder durch fremde Firmen durchführbar ist. Das System kann insbesondere die automatisierte Identifikation von Brandnames, Logos, usw. umfassen. Schlussendlich ist als Ausführungsbeispiel auch ein System zur autorisierten Competitor Überwachung vorstellbar, wobei z.B. sämtliche Tätigkeiten der Konkurrenz automatisiert erfasst und überwacht werden können. Es ist dem Fachmann klar, dass die Aufzählung der erwähnten Ausführungsbeispiele betreffend des Schutzumfangs keineswegs abschliessend ist, sondern nur beispielhaften Charakter umfasst. Andere Anwendungsbeispiele lassen sich leicht aus dem Schutzumfang ableiten.

## Patentansprüche

1. Verfahren zur Aggregation und Analyse von dezentralisiert gespeicherten Multimediadaten, wobei in einem Datenspeicher (31) ein oder mehrere verknüpfbare Suchbegriffe (310,311,312,313) abgespeichert werden, eine Recheneinheit (10) über ein Netzwerk (50) auf mit Quelldatenbanken (401,411,421,431) verbundene Netzwerknodes (40,41,42,43) zugreift und Daten der Quelldatenbanken (401,411,421,431) basierend auf den Suchbegriffen (310,311,312,313) selektiert werden, **dadurch gekennzeichnet,**
**dass** in einem Datenspeicher (32) mindestens ein Wertungsparameter (320,321,322) einem Suchbegriff (310,311,312,313) und/oder einer Verknüpfung von Suchbegriffen (310,311,312,313) zugeordnet abgespeichert wird,
**dass** mittels eines Filtermoduls (30) der Recheneinheit (10) auf eine Vielzahl von Quelldatenbanken (401,411,421,431) der Netzwerknodes (40,41,42,43) zugegriffen wird und für jeden Wertungsparameter (320,321,322) in Verbindung mit den zugeordneten Suchbegriffen (310,311,312,313) eine Wertungsliste (330,331,332) mit gefundenen Datensätzen erzeugt wird, wobei jedem der gefundenen Datensätze mindestens ein Quelldatenbankentyp und/oder eine Zeitangaben des Auftretens der Dokumente in der Quelldatenbank (401,411,421,431) und/oder Ortsangaben der Quelldatenbank (401,411,421,431) zugeord net abgespeichert wird,
**dass** mittels eines Parametrisierungsmodul (20) basierend auf der Wertungsliste (330,331,332), den zugeordneten Quelldatenbankentyp und/oder der Zeitangaben und/oder Ortsangaben für den jeweiligen Wertungsparameter (320,321,322) eine variable Stimmungsgrösse (21) mindestens teilweise dynamisch generiert wird, welche variable Stimmungsgrösse (21) zeitlichen Stimmungsschwankungen von Benutzern des Netzwerkes (50) entsprechen und
**dass** ein Überwachungsmodul basierend auf der variablen Stimmungsgrösse (21) auf ein bestimmbares Ereignis triggert, wobei der Trigger in Abhängigkeit des zeitlichen Verlaufs der Stimmungsgrösse (21) erfolgt.

2. Verfahren nach Anspruch 1, **dadurch gekennzeichnet, dass** die Quelldatenbankentypen unterschiedliche News-Groups und/oder Mail-Foren und/oder WWW-Server und/oder Chat-Server und/oder Journal-Server und/oder Themenboards und/oder fachspezifische Datenbanken umfassen.

3. Verfahren nach einem der Ansprüche 1 oder 2, **dadurch gekennzeichnet, dass** mittels eines Expertenmoduls des Parametrisierungsmoduls neu auftretende Quelldatenbankentypen dynamisch erfasst werden, mittels Vergleich mit historischen Daten im zeitlichen Verlauf der Stimmungsgrössen gewichtet werden und dem Filtermodul (20) zur Generierung der variablen Stimmungsgrössen (21) zugeordnet werden.

4. Verfahren nach einem der Ansprüche 1 bis 3, **dadurch gekennzeichnet, dass** mittels eines Historymoduls der zeitliche Verlauf der variablen Stimmungsgrösse (21) abgespeichert wird und einem Benutzer zugriffskontrolliert über das Netzwerk (50) zur Verfügung gestellt wird.

5. Verfahren nach einem der Ansprüche 1 bis 4, **dadurch gekennzeichnet, dass** die Wertungsliste (330,331,332) mit den gefundenen Datensätzen und/oder Verweisen auf gefundene Datensätze in einem Contentmodul (60) der Recheneinheit (10) für einen Benutzer zugreifbar abgespeichert wird.

6. Verfahren nach einem der Ansprüche 1 bis 5, **dadurch gekennzeichnet, dass** periodisch die Stimmungsgrössen (21) mittels der Recheneinheit (10) überprüft werden und, falls mindestens eine der Stimmungsgrössen (21) ausserhalb einer festlegbaren Schwankungstoleranz oder eines bestimmbaren Erwartungswertes liegt, die entsprechende Wertungsliste (330,331,332) mit den gefundenen Datensätzen und/oder Verweisen auf gefundene Datensätze im Contentmodul (60) der Recheneinheit (10) für einen Benutzer zugreifbar abgespeichert und/oder aktualisiert werden.

7. Verfahren nach einem der Ansprüche 1 bis 6, **dadurch gekennzeichnet, dass** ein oder mehrere der Wertungsparameter (320,321,322) mittels einer lexikographischen Wertungsdatenbank generiert werden.

8. Verfahren nach einem der Ansprüche 1 bis 7, **dadurch gekennzeichnet, dass** ein oder mehrere der Wertungsparameter (320,321,322) dynamisch mittels der Recheneinheit (10) während der Erzeugung der Wertungsliste (330,331,332) generiert werden.

9. Verfahren nach einem der Ansprüche 1 bis 8, **dadurch gekennzeichnet, dass** zur Generierung der variablen Stimmungsgrössen (21) und/oder der Daten des Contentmoduls (60) HTML und/oder HDML und/oder WML und/oder VRML und/oder ASD verwendet werden.

10. Verfahren nach einem der Ansprüche 1 bis 9, **dadurch gekennzeichnet, dass** ein Benutzerprofil anhand von Benutzerinformationen erstellt wird, wobei basierend auf den im Contentmodul (60) abgespeicherten gefundenen Datensätzen und/oder Verweisen auf gefundene Datensätze mittels eines Repackagingmoduls (61) unter Berücksichtigung der Daten des Benutzerprofils benutzerspezifisch optimierte Daten erzeugt werden, welche benutzerspezifisch optimierten Daten dem Benutzer (12) im Contentmodul (60) der Recheneinheit (10) abgespeichert zur Verfügung gestellt werden.

11. Verfahren nach Anspruch 10, **dadurch gekennzeichnet, dass** dem Benutzer (12) verschiedene Benutzerprofile für unterschiedliche Kommunikationsvorrichtungen (111,112,113) des Benutzers (12) zugeordnet abgespeichert werden.

12. Verfahren nach einem der Ansprüche 10 oder 11, **dadurch gekennzeichnet, dass** Daten zum Benutzerverhalten von der Recheneinheit (10) automatisch erfasst und dem Benutzerprofil zugeordnet abgespeichert werden.

13. Verfahren nach einem der Ansprüche 1 bis 12, **dadurch gekennzeichnet, dass** mittels eines Historymoduls (22) zu jeder berechneten variablen Stimmungsgrösse (21) die Werte bis zu einem festlegbaren vergangenen Zeitpunkt abgespeichert werden.

14. Verfahren nach Anspruch 13, **dadurch gekennzeichnet, dass** die Recheneinheit (10) mittels eines Extrapolationsmoduls (23) Erwartungswerte zu einer bestimmbaren Stimmungsgrösse (21) basierend auf den Daten des Historymoduls (22) für einen bestimmbaren zukünftigen Zeitpunkt berechnet und in einem Datenspeicher der Recheneinheit (10) abspeichert.

15. Verfahren nach einem der Ansprüche 1 bis 14, **dadurch gekennzeichnet, dass** die ein oder mehreren verknüpfbaren Suchbegriffe (310,311,312,313) mindestens teilweise dynamisch generiert werden.

16. System zur Aggregation und Überwachung von dezentralisiert gespeicherten Multimediadaten, welches eine Recheneinheit (10), einen Datenspeicher (31) zum Speichern von einem oder mehreren verknüpfbaren Suchbegriffen (310,311,312,313) sowie mit Quelldatenbanken (401,411,421,431) verbundene Netzwerknodes (40,41,42,43) umfasst, wobei die Quelldatenbanken (401,411,421,431) über das Netzwerk (50) mit der Recheneinheit (10) bidirektional verbunden sind, **dadurch gekennzeichnet,**
**dass** die Recheneinheit (10) einen Datenspeicher (32) zum Abspeichern von mindestens einem Wertungsparameter (320,321,322) umfasst, wobei der Wertungsparameter (320,321,322) einem Suchbegriff (310,311,312,313) und/oder einer Verknüpfung von Suchbegriffen (310,311,312,313) zuordenbar ist,
**dass** die Recheneinheit (10) ein Filtermodul (30) zum Erzeugen einer Wertungsliste (330,331,332) von in den Quelldatenbanken (401,411,421,431) der Netzwerknodes (40,41,42,43) gefundenen Datensätzen umfasst, wobei jedem Wertungsparameter (320,321,322) in Verbindung mit den zugeordneten Suchbegriffen (310,311,312,313) eine Wertungsliste (330,331,332) mit gefundenen Datensätzen zugeordnet ist und wobei jeder der gefundenen Datensätze mindestens ein Quelldatenbankentyp und/oder eine Zeitangabe des Auftretens der Dokumente in der Quelldatenbank (401,411,421,431) und/oder Ortsangabe der Quelldatenbank (401,411,421,431) umfasst,
**dass** die Recheneinheit (10) ein Parametrisierungsmodul (20) zum mindestens teilweise dynamischen Generieren einer variablen Stimmungsgrösse (21) basierend auf der Wertungsliste (330,331,332) für den jeweiligen Wertungsparameter (320,321,322) umfasst, welche variable Stimmungsgrösse (21) positiven und/oder negativen Stimmungsschwankungen von Benutzern des Netzwerkes (50) entsprechen, und
**dass** mittels eines Überwachungsmodul basierend auf der variable Stimmungsgrösse (21) auf ein bestimmbares Ereignis triggerbar ist, wobei der Trigger in Abhängigkeit des zeitlichen Verlaufs der Stimmungsgrösse (21) erfolgt.

17. System nach Anspruch 16, **dadurch gekennzeichnet, dass** die Quelldatenbankentypen unterschiedliche News-Groups und/oder Mail-Foren und/oder WWW-Server und/oder Chat-Server und/oder Journal-Server und/oder Themenboards und/oder fachspezifische Datenbanken umfassen.

18. System nach einem der Ansprüche 16 oder 17, **dadurch gekennzeichnet, dass** die Recheneinheit (10) eine lexikographische Wertungsdatenbank zur Generierung eines oder mehrerer der Wertungsparameter (320,321,322) umfasst.

19. System nach einem der Ansprüche 16 bis 18, **dadurch gekennzeichnet, dass** die Recheneinheit ein Modul zur dynamischen Generierung von einem oder mehreren der Wertungsparameter (320,321,322) während der Erzeugung der Wertungsliste (330,331,332) umfasst.

20. System nach einem der Ansprüche 16 bis 19, **dadurch gekennzeichnet, dass** die Wertungsliste (330,331,332) mit den gefundenen Datensätzen und/oder Verweisen auf gefundene Datensätze in einem Contentmodul (60) der Recheneinheit (10) für einen Benutzer zugreifbar abgespeichert ist.

21. System nach Anspruch 20, **dadurch gekennzeichnet, dass** mittels der Recheneinheit (10) periodisch die Stimmungsgrössen (21) überprüfbar sind und, falls mindestens eine der Stimmungsgrössen (21) ausserhalb einer festlegbaren Schwankungstoleranz oder bestimmbaren Erwartungswertes liegt, die entsprechende Wertungsliste (330,331,332) mit den gefundenen Datensätzen und/oder Verweisen auf gefundene Datensätze im Contentmodul (60) der Recheneinheit (10) aktualisierbar ist.

22. System nach einem der Ansprüche 16 bis 21, **dadurch gekennzeichnet, dass** die Recheneinheit (10) ein Modul zum Generieren der variablen Stimmungsgrössen (21) und/oder der Daten des Contentmoduls (60) mittels HTML und/oder HDML und/oder WML und/oder VRML und/oder ASD umfasst.

23. System nach einem der Ansprüche 16 bis 22, **dadurch gekennzeichnet, dass** die Recheneinheit (10) für jeden Benutzer (12) ein Benutzerprofil mit Benutzerinformationen umfasst, wobei die im Contentmodul (60) abgespeicherten gefundenen Datensätze und/oder Verweise auf die gefundenen Datensätze mittels eines Repackagingmoduls (61) unter Berücksichtigung der Daten des Benutzerprofils benutzerspezifisch optimierte Daten erzeugbar sind.

24. System nach Anspruch 23, **dadurch gekennzeichnet, dass** dem Benutzer (12) verschiedene Benutzerprofile für unterschiedliche Kommunikationsvorrichtungen (111,112,113) des Benutzers (12) zugeordnet abgespeichert sind.

25. System nach einem der Ansprüche 23 oder 24, **dadurch gekennzeichnet, dass** Daten zum Benutzerverhalten von der Recheneinheit (10) automatisch erfasst und dem Benutzerprofil zugeordnet abspeicherbar sind.

26. System nach einem der Ansprüche 16 oder 25, **dadurch gekennzeichnet, dass** die Recheneinheit (10) ein Historymodul (22) umfasst, welches zu jeder berechneten variablen Stimmungsgrösse (21) die Werte bis zu einem festlegbaren vergangenen Zeitpunkt umfasst und auf welchem die variablen Stimmungsgrössen (21) mittels der Kommunikationsvorrichtungen (111,112,113) zugreifbar sind.

27. System nach Anspruch 26, **dadurch gekennzeichnet, dass** die Recheneinheit (10) ein Extrapolationsmodul (23) umfasst, mittels welchem Erwartungswerte zu einem durch den Benutzer (12) bestimmbaren zukünftigen Zeitpunkt berechenbar sind.

28. System nach einem der Ansprüche 16 bis 27, **dadurch gekennzeichnet, dass** das System Mittel zum mindestens teilweisen dynamischen Generieren der ein oder mehreren verknüpfbaren Suchbegriffe (310,311,312,313) umfasst.

29. Computerprogrammprodukt, welches in den internen Speicher eines digitalen Computers ladbar ist und Softwarecodeabschnitte umfasst, mit denen die Schritte gemäss einem der Ansprüche 1 bis 15 durchführbar sind, wenn das Produkt auf einem Computer läuft.

## Claims

1. Method for aggregating and analyzing locally-stored multimedia data, wherein one or more linkable search terms (310, 311, 312, 313) are stored in a data storage means (31), an arithmetic unit (10) accesses network nodes (40, 41, 42, 43) connected to source databases (401, 411, 421, 431) through a network (50), and data from the source databases (401, 411, 421, 431) are selected based on the search terms (310, 311, 312, 313), **characterized in**
**that** at least one rating parameter (320, 321, 322) is stored in a data storage means (32) so as to be associated with one search term (310, 311, 312, 313) and/or with one linkage of search terms (310, 311, 312, 313);
**that** a plurality of source databases (401, 411, 421, 431) of the network nodes (40, 41, 42, 43) are accessed by means of a filter module (30) of the arithmetic unit (10), and a rating list (330, 331, 332) with found data sets is generated for each rating parameter (320, 321, 322) in connection with the associated search terms (310, 311, 312, 313), wherein at least one source database type and/or time indicator of the occurrence of the documents in the source database (401, 411, 421, 431) and/or location indicators of the source database (401, 411, 421, 431) are stored so as to be associated with each of the found data sets.
**that** a variable mood value (21) is generated at least in part dynamically by the parameterization module (20) based on the rating list (330, 331, 332), the associated source database type, and/or the time indicators and/or location indicators for the given rating parameter (320, 321, 322), which variable mood values (21) correspond to mood fluctuations over time by users of the network (50); and
**that** a monitoring module is triggered in response to a determinable event based on the variable mood value (21), wherein the trigger is effected as a function of the change over time in the mood value (21).

2. Method according to Claim 1, **characterized in that** the source database types comprise different new groups and/or mail forums and/or WWW servers and/or chat servers and/or journal servers and/or theme boards and/or subject-specific databases.

3. Method according to one of Claims 1 or 2, **characterized in that** newly appearing source database types: are captured dynamically by an expert module of the parameterization module, are weighted by using a comparison with historical data over time for the mood values, and are assigned to the filter module (20) to generate the variable mood values (21).

4. Method according to one of Claims 1 through 3, **characterized in that** the change over time for the variable mood values (21) is stored by a history module and is made available through the network (50) to the user in an access-controlled manner.

5. Method according to one of Claims 1 through 4, **characterized in that** the rating list (330, 331, 332) with the found data sets and/or references/links to found data sets is stored in a content module (60) of the arithmetic unit (10) so as to be accessible to a user.

6. Method according to one of Claims 1 through 5, **characterized in that** the mood values (21) are periodically checked by the arithmetic unit (10), and, if at least one of the mood values (21) lies outside a definable fluctuation tolerance or a determinable expected value, the corresponding rating list ((330, 331, 332) with the found data sets and/or references/links to found data sets are stored and/or are updated in a user-accessible manner in the content module (60) of the arithmetic unit (10).

7. Method according to one of Claims 1 through 6, **characterized in that** one or more of the rating parameters (320, 321, 322) are generated by a lexicographical rating database.

8. Method according to one of Claims 1 through 7, **characterized in that** one or more of the rating parameters (320, 321, 322) are generated dynamically by the arithmetic unit (10) during generation of the rating list (330, 331, 332).

9. Method according to one of Claims 1 through 8, **characterized in that** HTML and/or HDML and/or WML and/or VRML and/or ASD are used to generate the variable mood values (21).

10. Method according to one of Claims 1 or 9, **characterized in that** a user profile is created based on user information, wherein user-specifically-optimized data are generated by a repackaging module (61) while utilizing the data of the user profile based on the data sets found and stored in the content module (60) and/or on references/links to found data sets, which user-specifically-optimized data are provided to the user (12) in the content module (60) of the arithmetic unit (10).

11. Method according to Claim 10, **characterized in that** different user profiles (12) are stored so as to be associated with the user (12) for different communications devices (111, 112, 113) of the user (12).

12. Method according to one of Claims 10 or 11, **characterized in that** data on user behavior are automatically captured by the arithmetic unit and stored so as to be associated with the user profile.

13. Method according to one of Claims 1 through 12, **characterized in that** the values up to a definable past point in time are stored by a history module (22) for each calculated variable mood value (21).

14. Method according to Claim 13, **characterized in that** the arithmetic unit (10) uses an extrapolation module (23) to calculate expected values for a determinable mood value (21) based on the data of the history module (22) for a determinable future point in time and to store these expected values in a data storage means of the arithmetic unit (10).

15. Method according to one of Claims 1 through 14, **characterized in that** the one or more linkable search terms (310, 311, 312, 313) are at least in part generated dynamically.

16. System for aggregating and monitoring locally-stored multimedia data, which system comprises a arithmetic unit (10), a data storage means (31) for storing one or more linkable search terms ((310, 311, 312, 313), as well as network nodes (40, 41, 42, 43) connected to source databases (401, 411, 421, 431), wherein the source databases (401, 411, 421, 431) are connected bidirectionally through the network (50) to the arithmetic unit (10), **characterized in**
**that** the arithmetic unit (10) comprises a data storage means (32) for storing at least one rating parameter (320, 321, 322), wherein the rating parameter (320, 321, 322) is able to be associated with a search term (310, 311, 312, 313) and/or a linkage of search terms (310, 311, 312, 313);
**that** the arithmetic unit (10) comprises a filter module (30) for generating a rating list (330, 331, 332) of data sets found in the source databases (401, 411, 421, 431) of the network nodes (40, 41, 42, 43), wherein a rating list (330, 331, 332) with found data sets is associated with each rating parameter (320, 321, 322) in connection with the associated search terms (310, 311, 312, 313), and wherein each of the found data sets comprises at least one source database type and/or one time indicator of the occurrence of the documents in the source database (401, 411, 421, 431) and/or location indicator of the source database (401, 411, 421, 431).
**that** the arithmetic unit (10) comprises a parameterization module (20) for generating at least in part dynamically a variable mood value (21) based on the rating list (330, 331, 332) for the given rating parameter (320, 321, 322), which variable mood value (21) corresponds to positive and/or negative mood fluctuations of the user of the network (50); and
**that** a determinable event is triggerable by the monitoring module based on the variable mood values (21), wherein the trigger is effected as a function of the change over time in the mood value (21).

17. System according to Claim 16, **characterized in that** the source database types comprise different new groups and/or mail forums and/or WWW servers and/or chat servers and/or journal servers and/or theme boards and/or subject-specific databases.

18. System according to one of Claims 16 or 17, **characterized in that** the arithmetic unit (10) comprises a lexicographical rating database to generate one or more of the rating parameters (320, 321, 322).

19. System according to one of Claims 16 through 18, **characterized in that** the arithmetic unit comprises a module to dynamically generate one or more rating parameters (320, 321, 322) during generation of the rating list (330, 331, 332).

20. System according to one of Claims 16 through 19, **characterized in that** the rating list (330, 331, 332) with the found data sets and/or references/links to found data sets is stored in a content module (60) of the arithmetic unit (10) so as to be accessible to a user.

21. System according to Claim 20, **characterized in that** the mood values (21) are able to be checked periodically by the arithmetic unit (10), and if at least one of the mood values (21) lies outside a definable fluctuation tolerance or determinable expected value, the corresponding rating list (330, 331, 332) with the found data sets and/or references/links to found data sets is updatable in the content module (60) of the arithmetic unit (10).

22. System according to one of Claims 16 through 21, **characterized in that** the arithmetic unit (10) comprises a module to generate the variable mood values (21) and/or the data of the content module (60) by means of HTML and/or HDML and/or WML and/or VRML and/or ASD.

23. System according to Claims 16 through 22, **characterized in that** the arithmetic unit (10) comprises a user profile with user information for each user, wherein the found data sets stored in the content module (60) and/or references/links to the found data sets are able to be generated by a repackaging module (61) by utilizing the data of the user profile's user-specifically-optimized data.

24. System according to Claim 23, **characterized in that** different user profiles for different communications devices (111, 112, 113) of the user (12) are stored so as to be associated with the user (12).

25. System according to one of Claims 23 or 24, **characterized in that** data on the user's behavior are captured automatically by the arithmetic unit (10) and are storable so as to be associated with the user profile.

26. System according to one of Claims 16 or 25, **characterized in that** the arithmetic unit (10) comprises a history module (22A), which comprises the values up to a definable past point in time for each calculated variable mood value (21), and in which the variable mood values (21) are accessible by means of communications devices (111, 112, 113).

27. System according to Claim 26, **characterized in that** the arithmetic unit (10) comprises an extrapolation module (23) by which expected values are able to be calculated for a future point in time determinable by the user (12).

28. System according to one of Claims 16 through 27, **characterized in that** the system comprises means for generating the one or more linkable search terms (310, 311, 312, 313) at least in part dynamically.

29. Computer program product that is loadable into the memory of a digital computer and comprises software code segments by which the steps indicated in one of Claims 1 through 15 are executable when the product runs on a computer.

## Revendications

1. Procédé d'agrégation et d'analyse de données multimédia sauvegardées de façon décentralisée, dans lequel un ou plusieurs termes de recherche (310, 311, 312, 313) aptes à être combinés sont sauvegardés dans une mémoire de données (31), une unité de calcul (10) accède, sur un réseau (50), à des noeuds de réseau (40, 41, 42, 43) liés à des bases de données sources (401, 411, 421, 431) et des données de la base de données source (401, 411, 421, 431) sont sélectionnées sur la base des termes de recherche (310, 311, 312, 313), **caractérisé par le fait que** :
au moins un paramètre d'évaluation (320, 321, 322) est sauvegardé dans une mémoire de données (32) en étant associé à un terme de recherche (310, 311, 312, 313) et/ou à une combinaison de termes de recherche (310, 311, 312, 313),
au moyen d'un module filtre (30) de l'unité de calcul (10) on accède à une pluralité de bases de données sources (401, 411, 421, 431) des noeuds de réseau (40, 41, 42, 43), et pour chaque paramètre d'évaluation (320, 321, 322) en liaison avec le terme de recherche associé (310, 311, 312, 313) une liste d'évaluation (330, 331, 332) avec des enregistrements trouvés est générée, au moins un type de base de données source et/ou une donnée de date de l'apparition du document dans la base de données source (401, 411, 421, 431) et/ou une donnée d'emplacement de la base de données source (401, 411, 421, 431) étant sauvegardé en étant associé à chacun des enregistrements trouvés,
une grandeur d'humeur variable (21) est générée de façon au moins partiellement dynamique au moyen d'un module de paramétrage (20) sur la base de la liste d'évaluation (330, 331, 332), le type de base de données source associé et/ou les données de date et/ou les données d'emplacement pour le paramètre d'évaluation respectif, laquelle grandeur d'humeur variable (21) correspond à des changements d'humeur temporels de l'utilisateur du réseau (50), et
un module de contrôle déclenche, sur la base de la grandeur d'humeur variable (21), un événement déterminable, le déclenchement se produisant en fonction de l'historique temporel de la grandeur d'humeur (21).

2. Procédé selon la revendication 1, **caractérisé par le fait que** les types de base de données source comprennent différents Newsgroups et/ou forums de courrier et/ou serveurs WWW et/ou serveurs de conversation en ligne et/ou serveurs de journal et/ou forums thématiques et/ou bases de données spécifiques à un sujet.

3. Procédé selon l'une des revendications 1 ou 2, **caractérisé par le fait que** de nouveaux types de base de données source apparaissant sont répertoriés de façon dynamique au moyen d'un module expert du module de paramétrage, sont pondérés au moyen d'une comparaison avec des données d'historique dans l'historique temporel des grandeurs d'humeur et sont associés au module filtre (20) pour générer des grandeurs d'humeur variables (21).

4. Procédé selon l'une des revendications 1 à 3, **caractérisé par le fait qu'**au moyen d'un module d'historique, l'historique temporel de la grandeur d'humeur (21) variable est sauvegardé et est mis à disposition d'un utilisateur sur le réseau (50), avec un accès contrôlé.

5. Procédé selon l'une des revendications 1 à 4, **caractérisé par le fait que** la liste d'évaluation (330, 331, 332) avec les enregistrements trouvés et/ou les références aux enregistrements trouvés est sauvegardée dans un module de contenu (60) de l'unité de calcul (10) de façon accessible pour un utilisateur.

6. Procédé selon l'une des revendications 1 à 5, **caractérisé par le fait que** périodiquement les grandeurs d'humeur (21) sont vérifiées au moyen de l'unité de calcul (10) et dans le cas où au moins l'une des grandeurs d'humeur (21) se situe en dehors d'une tolérance de variation déterminable ou d'une valeur attendue déterminable, la liste d'évaluation correspondante (330, 331, 332) avec les enregistrements trouvés et/ou les références aux enregistrements trouvés est sauvegardée et/ou est actualisée dans le module de contenu (60) de l'unité de calcul (10) de façon accessible pour un utilisateur.

7. Procédé selon l'une des revendications 1 à 6, **caractérisé par le fait qu'**un ou plusieurs des paramètres d'évaluation (320, 321, 322) sont générés au moyen d'une base de données d'évaluation lexicographique.

8. Procédé selon l'une des revendications 1 à 7, **caractérisé par le fait qu'**un ou plusieurs des paramètres d'évaluation (320, 321, 322) sont générés de façon dynamique au moyen de l'unité de calcul (10) pendant la génération de la liste d'évaluation (330, 331, 332).

9. Procédé selon l'une des revendications 1 à 8, **caractérisé par le fait que** pour la génération des grandeurs d'humeur variables (21) et/ou des données du module de contenu (60) sont utilisés de l'HTML ou de l'HDML et/ou du WML et/ou du VRML et/ou de l'ASD.

10. Procédé selon l'une des revendications 1 à 9, **caractérisé par le fait qu'**un profil d'utilisateur est établi à l'aide d'informations d'utilisateur, dans lequel des données optimisées spécifiques à l'utilisateur sont générées sur la base des enregistrements trouvés et/ou des références aux enregistrements trouvés sauvegardés dans le module de contenu (60) au moyen d'un module de reconditionnement (61) en tenant compte des données du profil d'utilisateur, lesquelles données optimisées spécifiques à l'utilisateur sont mises à disposition de l'utilisateur (12) en étant sauvegardées dans le module de contenu (60) de l'unité de calcul (10).

11. Procédé selon la revendication 10,
**caractérisé par le fait que** différents profils d'utilisateur pour différents dispositifs de communication (111, 112, 113) de l'utilisateur (12) sont sauvegardés en étant associés à l'utilisateur (12).

12. Procédé selon l'une des revendications 10 à 11, **caractérisé par le fait que** des données sur le comportement de l'utilisateur sont répertoriées automatiquement par l'unité de calcul (10) et sont sauvegardées en étant associées au profil d'utilisateur.

13. Procédé selon l'une des revendications 1 à 12, **caractérisé par le fait qu'**au moyen d'un module d'historique (22), pour chaque grandeur d'humeur variable (21) calculée, les valeurs jusqu'à un point temporel passé déterminable sont sauvegardées.

14. Procédé selon la revendication 13, **caractérisé par le fait que** l'unité de calcul (10) calcule au moyen d'un module d'extrapolation (23) les grandeurs attendues pour une grandeur d'humeur (21) déterminable, sur la base des données du module d'historique (22) pour un point temporel futur déterminable et les sauvegarde dans une mémoire de données de l'unité de calcul (10).

15. Procédé selon l'une des revendications 1 à 14, **caractérisé par le fait qu'**un ou plusieurs termes de recherche apte à être combinés (310, 311, 312, 313) sont générés de façon au moins partiellement dynamique.

16. Système d'agrégation et de contrôle de données multimédias sauvegardées de façon décentralisée, qui comprend une unité de calcul (10), une mémoire de données (31) pour sauvegarder un ou plusieurs termes de recherche apte à être combinés (310, 311, 312, 313) ainsi que des noeuds de réseau (40, 41, 42, 43) liés à des bases de données sources (401, 411, 421, 431), les bases de données sources (401, 411, 421, 431) étant liées de façon bidirectionnelle sur le réseau (50) à l'unité de calcul (10), **caractérisé par le fait que** :
l'unité de calcul (10) comprend une mémoire de données (32) pour sauvegarder au moins un paramètre d'évaluation (320, 321, 322), le paramètre d'évaluation (320, 321, 322) étant apte à être associé à un terme de recherche (310, 311, 312, 313) et/ou à une combinaison de termes de recherche (310, 311, 312, 313),
l'unité de calcul (10) comprend un module filtre (30) pour générer une liste d'évaluation (330, 331, 332) des enregistrements trouvés dans les bases de données sources (401, 411, 421, 431) des noeuds de réseau (40, 41, 42, 43), une liste d'évaluation (330, 331, 332) avec des enregistrements trouvés étant associée à chaque paramètre d'évaluation (320, 321, 322) en liaison avec les termes de recherche associés (310, 311, 312, 313), et chacun des enregistrements trouvés comprenant au moins un type de base de données source et/ou une donnée de date d'apparition des documents dans la base de données source (401, 411, 421, 431) et/ou une donnée d'emplacement des bases de données sources (401, 411, 421, 431),
l'unité de calcul (10) comprend un module de paramétrage (20) pour générer de façon au moins partiellement dynamique une grandeur d'humeur variable (21) en se basant sur la liste d'évaluation (330, 331, 332) pour les paramètres d'évaluation respectifs (320, 321, 322), laquelle grandeur d'humeur variable (21) correspond à des variations d'humeur positives et/ou négatives de l'utilisateur du réseau (50), et
au moyen d'un module de contrôle, sur la base des grandeurs d'humeur variables (21), un événement déterminable est déclenchable, le déclenchement se produisant en fonction de l'historique temporel de la grandeur d'humeur (21).

17. Système selon la revendication 16, **caractérisé par le fait que** les types de base de données source comprennent différents Newsgroups et/ou forums de courrier et/ou serveurs WWW et/ou serveur de conversation en ligne et/ou serveur de journal et/ou forums thématiques et/ou bases de données spécifiques à un sujet.

18. Système selon l'une des revendications 16 ou 17, **caractérisé par le fait que** l'unité de calcul comprend une base de données d'évaluation lexicographique pour générer un ou plusieurs des paramètres d'évaluation (320, 321, 322).

19. Système selon l'une des revendications 16 à 18, **caractérisé par le fait que** l'unité de calcul comprend un module pour générer de façon dynamique un ou plusieurs des paramètres d'évaluation (320, 321, 322) pendant la génération de la liste d'évaluation (330, 331, 332).

20. Système selon l'une des revendications 16 à 19, **caractérisé par le fait que** la liste d'évaluation (330, 331, 332) avec les enregistrements trouvés et/ou les références aux enregistrements trouvés est sauvegardée dans un module de contenu (60) de l'unité de calcul (10) de façon accessible pour un utilisateur.

21. Système selon la revendication 20, **caractérisé par le fait qu'**au moyen de l'unité de calcul (10), les grandeurs d'humeur (21) sont vérifiées de façon périodique et, dans le cas où au moins l'une des grandeurs d'humeur (21) est située en dehors d'une tolérance de variation déterminable ou d'une valeur attendue déterminable, la liste d'évaluation correspondante (330, 331, 332), avec les enregistrements trouvés et/ou les références aux enregistrements trouvés est actualisable dans le module de contenu (60) de l'unité de calcul (10).

22. Système selon l'une des revendications 16 à 21, **caractérisé par le fait que** l'unité de calcul (10) comprend un module pour générer les grandeurs d'humeur variables (21) et/ou les données du module de contenu (60) au moyen d'HTML et/ou d'HDML et/ou de WML et/ou de VRML et/ou d'ASD.

23. Système selon l'une des revendications 16 à 22, **caractérisé par le fait que** l'unité de calcul (10) comprend pour chaque utilisateur (12) un profil d'utilisateur avec des informations d'utilisateur, dans lequel des données optimisées spécifiques à l'utilisateur sont aptes à être générés sur la base des enregistrements trouvés et/ou des références aux enregistrements trouvés sauvegardés dans le module de contenu (60), au moyen d'un module de reconditionnement (61), en tenant compte des données du profil d'utilisateur.

24. Système selon la revendication 23, **caractérisé par le fait que** des profils d'utilisateur différents pour des dispositifs de communication (111, 112, 113) différents de l'utilisateur (12) sont sauvegardés en étant associés à l'utilisateur (12).

25. Système selon l'une des revendications 23 ou 24, **caractérisé par le fait que** des données sur le comportement de l'utilisateur sont répertoriées de façon automatique par l'unité de calcul (10) et sont aptes à être sauvegardés en étant associées au profil d'utilisateur.

26. Système selon l'une des revendications 16 à 25, **caractérisé par le fait que** l'unité de calcul (10) comprend un module d'historique (22), lequel comprend, pour chaque grandeur d'humeur variable (21) déterminable, les valeurs jusqu'à un point temporel passé déterminable, et sur lequel les grandeurs d'humeur variables (21) sont accessibles au moyen des dispositifs de communication (111, 112, 113).

27. Système selon la revendication 26, **caractérisé par le fait que** l'unité de calcul (10) comprend un module d'extrapolation (23), au moyen duquel sont calculées des valeurs attendues pour un point temporel futur déterminable par l'utilisateur (12).

28. Système selon l'une des revendications 16 à 27, **caractérisé par le fait que** le système comprend un moyen pour générer de façon au moins partiellement dynamique un ou plusieurs termes de recherche apte à être combinés (310, 311, 312, 313).

29. Produit de programme d'ordinateur, qui est apte à être chargé dans la mémoire interne d'un ordinateur numérique et comprend des parties de code de programme, aptes à exécuter les étapes telles que définies à l'une des revendications 1 à 15, quand le produit fonctionne sur un ordinateur.
